(19) Europäisches Patentamt
European Patent Office
Office européen des brevets

(11) EP 1 819 223 B1

(12) # EUROPÄISCHE PATENTSCHRIFT

(45) Veröffentlichungstag und Bekanntmachung des Hinweises auf die Patenterteilung:
**12.03.2008 Patentblatt 2008/11**

(21) Anmeldenummer: **05809496.2**

(22) Anmeldetag: **24.11.2005**

(51) Int Cl.:
***A01N 35/06*** *(2006.01)*

(86) Internationale Anmeldenummer:
**PCT/EP2005/012562**

(87) Internationale Veröffentlichungsnummer:
**WO 2006/056434 (01.06.2006 Gazette 2006/22)**

(54) **VERWENDUNG VON MENADIONE ZUR VERSTÄRKUNG DER WIRKSAMKEIT VON AGROCHEMIKALIEN**

USE OF MENADIONE FOR BOOSTING THE EFFECTIVENESS OF AGROCHEMICALS

UTILISATION DE LA MENADIONE POUR RENFORCER L'EFFICACITE DES PRODUITS AGROCHIMIQUES

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**HR YU**

(30) Priorität: **26.11.2004 DE 102004057279**

(43) Veröffentlichungstag der Anmeldung:
**22.08.2007 Patentblatt 2007/34**

(73) Patentinhaber: **BASF SE**
**67056 Ludwigshafen (DE)**

(72) Erfinder:
- **KÖHLE, Harald**
  **67273 Bobenheim (DE)**
- **STIERL, Reinhard**
  **67251 Freinsheim (DE)**
- **GOLD, Randall, Evan**
  **67283 Obrigheim (DE)**
- **GÖRTH, Felix, Christian**
  **67056 Ludwigshafen (DE)**
- **SPEAKMAN, John-Bryan**
  **67273 Bobenheim (DE)**
- **DOMBO, Peter**
  **65207 Wiesbaden (DE)**
- **SEMAR, Martin**
  **76889 Gleiszellen-Gleishorbach (DE)**
- **STROBEL, Dieter**
  **67273 Herxheim am Berg (DE)**
- **NIEDENBRÜCK, Matthias**
  **67117 Limburgerhof (DE)**
- **BESTMAN, Hans**
  **67434 Neustadt/Weinstrasse (DE)**

(56) Entgegenhaltungen:
**WO-A-01/28328** **WO-A-82/01821**

- **DATABASE CA [Online] CHEMICAL ABSTRACTS SERVICE, COLUMBUS, OHIO, US; BORGES, A. A. ET AL: "Induced resistance to Fusarial wilt of banana by menadione sodium bisulphite treatments" XP002370379 gefunden im STN Database accession no. 2004:953513 & CROP PROTECTION , 23(12), 1245-1247 CODEN: CRPTD6; ISSN: 0261-2194, 2004,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 819 223 B1

## Beschreibung

Die vorliegende Erfindung betrifft die Verwendung von Menadione der Formel I

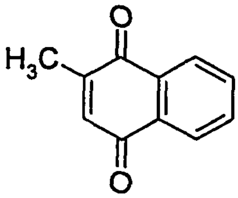

I

oder eines seiner pflanzenverträglichen Säureadditionssalze zur Verstärkung der Wirksamkeit von Agrochemikalien gegen pflanzenpathogene Pilze.

Insbesondere betrifft die Erfindung Wirkstoffkombinationen, enthaltend als aktive Komponenten

1) Menadione der Formel I,
und

2) mindestens einen Wirkstoff II ausgewählt aus den folgenden Gruppen:

A) Azole wie Cyproconazol, Difenoconazol, Epoxiconazol, Fluquiconazol, Flusilazol, Hexaconazol, Imazalil, Metconazol, Myclobutanil, Penconazol, Prochloraz, Prothioconazol, Tebuconazol, Triadimefon, Triadimenol, Triflumizol;

B) Strobilurine wie Azoxystrobin, Dimoxystrobin, Fluoxastrobin, Kresoxim-methyl, Metominostrobin, Orysastrobin, Picoxystrobin, Pyraclostrobin, Trifloxystrobin oder 2-(ortho-((2,5-Dimethylphenyl-oxymethylen)phenyl)-3-methoxy-acrylsäuremethylester;

C) Acylalanine wie Benalaxyl, Metalaxyl, Mefenoxam, Ofurace, Oxadixyl;

D) Aminderivate wie Spiroxamin;

E) Anilinopyrimidine wie Pyrimethanil, Mepanipyrim oder Cyprodinil;

F) Dicarboximide wie Iprodion, Procymidon, Vinclozolin;

G) Zimtsäureamide und Analoge wie Dimethomorph, Flumetover oder Flumorph;

H) Dithiocarbamate wie Ferbam, Nabam, Maneb, Metam, Metiram, Propineb, Polycarbamat, Thiram, Ziram, Zineb;

I) Heterocylische Verbindungen wie Benomyl, Boscalid, Carbendazim, Dithianon, Famoxadon, Fenamidon, Picobenzamid, Proquinazid, Quinoxyfen, Thiophanat-methyl, Triforine, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid oder
5-Chlor-7-(4-methyl-piperidin-1-yl)-6-(2,4,6-trifluor-phenyl)-[1,2,4]triazolo[1,5-a]pyrimidin,
Thiophenderivate der Formel II-A,

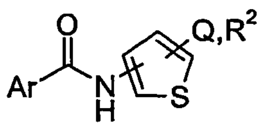

II-A

in der die Variablen folgende Bedeutungen haben:

Ar Phenyl oder ein fünf- oder sechsgliedriger aromatischer Heterocyclus, enthaltend ein bis vier Heteroatome aus der Gruppe O, N oder S, wobei die Cyclen unsubstituiert sind oder durch eine bis drei Gruppen $R^{21}$ substituiert sein können:
$R^{21}$ Halogen, $C_1$-$C_4$-Alkyl oder $C_1$-$C_4$-Halogenalkyl;
$R^2$ Phenyl, $C_1$-$C_8$-Alkyl, $C_1$-$C_8$-Halogenalkyl, $C_1$-$C_8$-Alkoxy, $C_1$-$C_8$-Halogenalkoxy;
Q Wasserstoff, $C_1$-$C_8$-Alkyl, $C_1$-$C_8$-Halogenalkyl, $C_1$-$C_8$-Alkoxy, $C_1$-$C_8$-Halogenalkoxy;

K) Schwefel und Kupferfungizide wie Bordeaux Brühe, Kupferacetat, Kupferoxychlorid, basisches Kupfersulfat;

L) Nitrophenylderivate, wie Dinocap;

M) Phenylpyrrole wie Fenpicionil oder Fludioxonil;

N) Sulfensäurederivate wie Captafol, Dichlofluanid, Tolylfluanid;

O) Sonstige Fungizide ausgewählt aus Benthiavalicarb, Chlorothalonil, Cyflufenamid, Diclofluanid, Diethofencarb, Ethaboxam, Fenhexamid, Fluazinam, Iprovalicarb, Mandipropamid, Metrafenon, Zoxamid;
Oximetherderivate der Formel III,

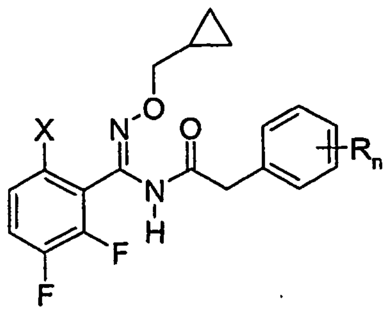

III

in der

X $C_1$-$C_4$-Halogenalkoxy,
n 0, 1, 2 oder 3,
R Halogen, $C_1$-$C_4$-Alkyl, $C_1$-$C_4$-Halogenalkyl, $C_1$-$C_4$-Alkoxy, oder Halogenalkoxy bedeuten; und

Phenylamidinderivate der Formel IV,

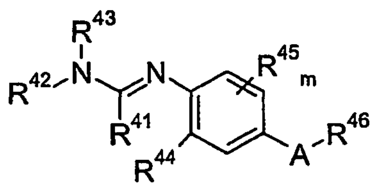

IV

in der die Variablen folgende Bedeutungen haben:

$R^{41}$ Wasserstoff, $C_1$-$C_8$-Alkyl, $C_2$-$C_8$-Alkenyl oder $C_2$-$C_8$-Alkinyl, welche unsubstituiert sind oder durch eine bis drei Gruppen $R^a$ substituiert sein können:
$R^a$ Halogen, $C_1$-$C_8$-Alkoxy, $C_1$-$C_8$-Halogenalkoxy, $C_1$-$C_8$-Alkylthio oder
Phenyl, welches substituiert sein kann durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;
$R^{42}$,$R^{43}$ können gleich oder verschieden sein und Wasserstoff, Cyano, $C_1$-$C_8$-Alkyl, $C_2$-$C_8$-Alkenyl, $C_2$-$C_8$-Alkinyl, $C_1$-$C_8$-Alkoxy, $C_1$-$C_8$-Alkoxyalkyl, Benzyloxy oder $C_1$-$C_8$-Alkylcarbonyl, welche unsubstituiert sind oder durch eine bis drei Gruppen $R^a$ substituiert sein können;
$R^{44}$ Wasserstoff, $C_1$-$C_8$-Alkyl, $C_2$-$C_8$-Alkenyl oder $C_2$-$C_8$-Alkinyl, welche unsubstituiert sind oder durch

eine bis drei Gruppen $R^b$ substituiert sein können:
$R^b$ eine der bei $R^a$ genannten Gruppen, Cyano, $C(=O)R^c$, $C(=S)R^c$ oder $S(O)_pR^c$,
$R^c$ $C_1$-$C_8$-Alkyl, $C_1$-$C_8$-Halogenalkyl, $C_1$-$C_8$-Alkoxy, $C_1$-$C_8$-Halogenalkoxy, $C_1$-$C_8$-Alkylthio, Amino, $C_1$-$C_8$-Alkylamino, Di($C_1$-$C_8$-alkyl)amino oder
Phenyl, welches substituiert sein kann durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;

m 0 oder 1;
$R^{45}$ eine der bei $R^{44}$ genannten Gruppen;
A eine direkte Bindung, -O-, -S-, $NR^d$, $CHR^e$ oder -O-$CHR^e$; $R^d$,$R^e$ eine der bei $R^a$ genannten Gruppen;
$R^{46}$ Phenyl oder fünf- oder sechsgliedriger gesättigter, partiell ungesättigter oder aromatischer Heterocyclus, enthaltend ein bis vier Heteroatome aus der Gruppe O, N oder S, wobei die Gruppen $R^{46}$ unsubstituiert sind oder durch eine bis drei $R^f$ substituiert sein können:
$R^f$ eine der bei $R^b$ genannten Gruppen oder
Amino, $C_1$-$C_8$-Alkylamino, Di($C_1$-$C_8$-alkyl)amino, $C_1$-$C_8$-Halogenalkyl, $C_1$-$C_8$-Alkoxyalkyl, $C_2$-$C_8$-Alkenyloxyalkyl, $C_2$-$C_8$-Alkinyloxyalkyl, $C_1$-$C_8$-Alkylcarbonyloxy-$C_1$-$C_8$-alkyl, Cyanooxy-$C_1$-$C_8$-alkyl, $C_3$-$C_6$-Cycloalkyl oder Phenoxy, wobei die cyclischen Gruppen substituiert sein können durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;

Verbindungen der Formel V,

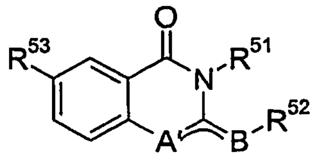

V

in der die Variablen folgende Bedeutung haben:

A' O oder N;
B N, oder eine direkte Bindung;
$R^{51}$ $C_1$-$C_4$-Alkyl;
$R^{52}$ $C_1$-$C_4$-Alkoxy; und
$R^{53}$ Halogen;

in einer synergistisch wirksamen Menge;
außerdem betrifft die Erfindung ein Verfahren zur Bekämpfung von Schadpilzen mit Mischungen von Menadione mit Wirkstoffen aus den Gruppen A) bis O), Mittel, die diese Mischungen enthalten und die Verwendung von Menadione zur Verstärkung der fungiziden Wirksamkeit synthetischer Fungizide gegen pflanzenpathogene Pilze.
2-Methyl-1,4-naphthochinon der Formel I, ist als Menadione oder Vitamin K3 allgemein bekannt [vgl.: http://www.awt-feedadditives.de/fileadmin/awt/pdf/AWT-Statement-Vitamin_K3_Menadion_.pdf]. Es ist als Zusatzstoff für die Human- und Tierernährung etabliert, im Pharmabereich als Synergist mit Antibiotika und Antimykotika (WO 00/006143; WO 82/01821), aber auch als Biozid gegen das Wachstum von Mikroorganismen (WO 01/028328) und im Pflanzenschutz als Safener (WO 03/105 586) bekannt. Darüber hinaus ist es als Pflanzenstärkungsmittel beschrieben [vgl.: A. A. Borges, H. J. Cools and J. A. Lucas, Plant Pathology Vol. 52 (4), S. 429ff (2003)].

Im Hinblick auf eine Senkung der Aufwandmengen von Agrochemikalien im Pflanzenschutz und eine Verbreiterung des Wirkungsspektrums der bekannten Wirkstoffe lagen der vorliegenden Erfindungen Mischungen als Aufgabe zugrunde, die bei verringerter Gesamtmenge an ausgebrachten Wirkstoffen eine verbesserte Wirkung gegen pflanzenpathogene Schadpilze zeigen.

Demgemäss wurde gefunden, dass obwohl Menadione selbst keine fungizide Wirkung gegen pflanzenpathogene Pilze aufweist, es als Synergist auf fungizide Agrochemikalien wirkt. Als fungizide Agrochemikalien im Sinne der vorliegenden Erfindung kommen insbesonere die voranstehend in den Gruppen A) bis O) genannten Wirkstoffe in Betracht.

Desweiteren wurden die voranstehend definierten Mischungen gefunden. Es wurde außerdem gefunden, dass sich bei gleichzeitiger gemeinsamer oder getrennter Anwendung von Menadione und eines Wirkstoffs II aus den Gruppen A) bis O) oder bei Anwendung von Menadione und eines Wirkstoffs aus den Gruppen A) bis O) nacheinander pflanzenpathogene Schadpilze besser bekämpfen lassen als mit den jeweiligen Wirkstoffen aus den Gruppen A) bis O) allein (synergistische Mischungen).

Durch Zumischen von Menadione zu dem anderen fungiziden Wirkstoff aus den Gruppen A) bis O) als Prämix oder als Tankmix kann die zum Erzielen der gewünschten fungiziden Wirkung nötige Aufwandmenge an Agrochemikalien spürbar abgesenkt werden.

Die Mischungen von Menadione und mindestens eines Wirkstoffs aus den Gruppen A) bis O), bzw. die gleichzeitige gemeinsame oder getrennte Verwendung von Menadione und eines Wirkstoffs aus den Gruppen A) bis O) zeichnen sich aus durch eine hervorragende Wirksamkeit gegen ein breites Spektrum von pflanzenpathogenen Pilzen, insbesondere aus der Klasse der *Ascomyceten, Deuteromyceten, Oomyceten* und *Basidiomyceten*. Sie können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Speziell eignen sie sich zur Bekämpfung folgender Pflanzenkrankheiten:

- *Alternaria* Arten an Gemüse, Raps, Zuckerrüben und Obst und Reis,
- *Aphanomyces* Arten an Zuckerrüben und Gemüse,
- *Bipolaris-* und *Drechslera* Arten an Mais, Getreide, Reis und Rasen,
- *Blumeria graminis* (Echter Mehltau) an Getreide,
- *Botrytis cinerea* (Grauschimmel) an Erdbeeren, Gemüse, Blumen und Weinreben,
- *Bremia lactucae* an Salat,
- *Cercospora* Arten an Mais, Sojabohnen, Reis und Zuckerrüben,
- *Cochliobolus* Arten an Mais, Getreide, Reis (z.B. *Cochliobolus sativus* an Getreide, *Cochliobolus miyabeanus* an Reis),
- *Colletotricum* Arten an Sojabohnen und Baumwolle,
- *Drechslera Arten* an Getreide und Mais,
- *Exserohilum* Arten an Mais,
- *Erysiphe cichoracearum* und *Sphaerotheca fuliginea* an Gurkengewächsen,
- *Fusarium* und *Verticillium* Arten an verschiedenen Pflanzen
- *Gaeumanomyces graminis* an Getreide
- *Gibberella* Arten an Getreide und Reis (z.B. *Gibberella fujikuroi* an Reis)
- *Grainstaining complex* an Reis,
- *Helminthosporium* Arten an Mais und Reis,
- *Michrodochium nivale* an Getreide,
- *Mycosphaerella* Arten an Getreide, Bananen und Erdnüssen,
- *Phakopsara pachyrhizi* und *Phakopsara meibomiae* an Sojabohnen,
- *Phomopsis* Arten an Sojabohnen und Sonnenblumen,
- *Phytophthora infestans* an Kartoffeln und Tomaten,
- *Plasmopara viticola* an Weinreben,
- *Podosphaera leucotricha* an Apfel,
- *Pseudocercosporella herpotrichoides* an Getreide,
- *Pseudoperonospora* Arten an Hopfen und Gurkengewächsen,
- *Puccinia* Arten an Getreide und Mais,
- *Pyrenophora* Arten an Getreide,
- *Pyricularia oryzae , Corticium sasakii, Sarocladium oryzae, S. attenuatum, Entyloma oryzae* an Reis,
- *Pyricularia grisea* an Rasen und Getreide,
- *Pythium spp.* an Rasen, Reis, Mais, Baumwolle, Raps, Sonnenblumen, Zuckerrüben, Gemüse und anderen Pflanzen,
- *Rhizoctonia-Arten* an Baumwolle, Reis, Kartoffeln, Rasen, Mais, Raps, Kartoffeln, Zuckerrüben, Gemüse und anderen Pflanzen,
- *Sclerotinia* Arten an Raps und Sonnenblumen,
- *Septoria tritici* und *Stagonospora nodorum* an Weizen,
- *Erysiphe* (syn. *Uncinula*) *necator an* Weinrebe,
- *Setospaeria* Arten an Mais und Rasen,
- *Sphacelotheca reilinia* an Mais,
- *Thievaliopsis* Arten an Sojabohnen und Baumwolle,
- *Tilletia Arten* an Getreide,
- *Ustilago* Arten an Getreide, Mais und Zuckerrübe und
- *Venturia* Arten (Schorf) an Apfel und Birne.

Menadione und Wirkstoffe aus den Gruppen A) bis O) können gleichzeitig gemeinsam oder getrennt oder nacheinander aufgebracht werden, wobei die Reihenfolge bei getrennter Applikation im allgemeinen keine Auswirkung auf den Bekämpfungserfolg hat. Bevorzugt wird bei getrennter Applikation, zuerst Menadione ausgebracht.

Die eingangs definierten Wirkstoffe sind z.T. in der Lage, mit anorganischen oder organischen Säuren oder mit Metallionen Salze oder Addukte zu bilden. Die Verwendung der betreffenden Salze oder Addukte ist in der vorliegenden Erfindung eingeschlossen.

Menadione wird bevorzugt als Addukt pflanzenverträglicher Säureadditionssalze verwendet. Die Addukte von Menadione x Natriumbisulfit, Nicotinamid Bisulfit und Dimethylpyrimidinol Bisulfit sind weit verbreitet und stellen bevorzugte Gegenstände in der vorliegenden Erfindung dar. Die Verwendung von Menadione x $NaHSO_3$ in der vorliegenden Erfindung ist besonders bevorzugt.

Die eingangs als Komponente 2 genannten Wirkstoffe der Gruppen A) bis O), ihre Herstellung und ihre Wirkung gegen pflanzenpathogene Schadpilze sind allgemein bekannt (vgl.: http://www.hclrss.demon.co.uk/index.html):

Cyproconazol, 2-(4-Chlor-phenyl)-3-cyclopropyl-1-[1,2,4]triazol-1-yl-butan-2-ol (US 4 664 696);
Difenoconazole, 1-{2-[2-Chlor-4-(4-chlor-phenoxy)-phenyl]-4-methyl-[1,3]dioxolan-2-ylmethyl}-1H-[1,2,4]triazol (GB-A 2 098 607);
Epoxiconazol, (2*RS*,3*SR*)-1-[3-(2-Chlorphenyl)-2,3-epoxy-2-(4-fluorphenyl)propyl]-1*H*-1,2,4-thiazol (EP-A 196 038);
Fluquiconazol, 3-(2,4-Dichlor-phenyl)-6-fluor-2-[1,2,4]- triazol-1-yl-3H-quinazolin-4-on (Proc. Br. Crop Prot. Conf.-Pests Dis., 5-3, 411 (1992));
Flusilazol, 1-{[Bis-(4-fluor-phenyl)-methyl-silanyl]- rnethyl}-1H-[1,2,4]triazol (Proc. Br. Crop Prot. Conf.-Pests Dis., 1, 413 (1984));
Hexaconazol, 2-(2,4-Dichlor-phenyl)-1-[1,2,4]triazol-1- yl-hexan-2-ol (CAS RN [79983-71-4]);
Imazaill, (*RS*)-1-(β-Allyloxy-2,4-dichlorphenylethyl)imidazol [CAS RN 35554-44-0];
Metconazol, 5-(4-Chlor-benzyl)-2,2-dimethyl-1-[1,2,4]triazol-1-ylmethyl-cyclopentanol (GB 857 383);
Myclobutanil, 2-(4-Chlor-phenyl)-2-[1,2,4]triazol-1-ylmethyl-pentan-nitril (CAS RN [88671-89-0]);
Penconazol, 1-[2-(2,4-Dichlor-phenyl)-pentyl]-1H- [1,2,4]triazol (Pesticide Manual, 12th Ed. (2000), Seite 712);
Prochloraz, Imidazol-1-carbonsäure-propyl-[2-(2,4,6-trichlor-phenoxy)-ethyl]-amid (US 3 991 071);
Prothioconazol, 2-[2-(1-Chlor-cyclopropyl)-3-(2-chlor-phenyl)-2-hydroxy-propyl]-2,4-dihydro-[1,2,4]triazol-3-thion (WO 96/16048);
Tebuconazol, 1-(4-Chlorphenyl)-4,4-dimethyl-3-[1,2,4]triazol-1-ylmethyl-pentan-3-ol (EP-A 40 345);
Triadimefon, 1-(4-Chlorphenoxy)-3,3-dimethyl-1-(1H-1,2,4-triazol-1-yl)-2-butanon [CAS RN 43121-4.3-3];
Triadimenol, β-(4-Chlorphenoxy)-α-(1,1-dimethylethyl)-1*H*-1,2,4-triazol-1-ethanol [CAS RN 55219-65-3];
Triflumizol, (4-Chlor-2-trifluormethyl-phenyl)-(2-propoxy-1-[1,2,4]triazol-1-yl-ethyliden)-amin (JP-A 79/119 462)
Azoxystrobin, 2-{2-[6-(2-Cyano-1-vinyl-penta-1,3-dienyloxy)-pyrimidin-4-yloxy]-phenyl}-3-methoxy-acrylsäuremethylester (EP-A 382 375)
Dimoxystrobin, (*E*)-2-(methoxyimino)-*N*-methyl-2-[α-(2,5-xylyloxy)-*o*-tolyl]acetamid (EP-A 477 631);
Fluoxastrobin, (*E*)-{2-[6-(2-chlorphenoxy)-5-fluorpyrimidin-4-yloxy]phenyl}(5,6-dihydro-1,4,2-dioxazin-3-yl)methanon-O-methyloxim (WO 97/27189);
Kresoxim-methyl, (*E*)-Methoxyimino[α-(*o*-tolyloxy)-*o*-tolyl]essigsäuremethylester (EP-A 253 213);
Metominostrobin, (*E*)-2-(Methoxyimino)-*N*-methyl-2-(2-phenoxyphenyl)acetamid (EP-A 398 692);
Orysastrobin, (2*E*)-2-(Methoxyimino)-2-{2-[(3*E*,5*E*,6*E*)-5-(methoxyimino)-4,6-dimethyl-2,8-dioxa-3,7-diazanona-3,6-dien-1-yl]phenyl}-*N*-methylacetamid (WO 97/15552);
Picoxystrobin, 3-Methoxy-2-[2-(6-trifluormethyl-pyridin-2-yloxymethyl)-phenyl]-acrylsäuremethylester (EP-A 278 595);
Pyraclostrobin, *N*-{2-[1-(4-Chlorphenyl)-1*H*-pyrazol-3-yloxymethyl]phenyl}(*N*-methoxy)carbaminsäuremethylester (WO-A 96/01256);
Trifloxystrobin, (*E*)-Methoxyimino-{(*E*)-α-[1-(α,α,α-trifluor-*m*-tolyl)ethylideneaminooxy]-*o*-tolyl}essigsäuremethylester (EP-A 460 575);
Benalaxyl, Methyl *N*-(phenylacetyl)-*N*-(2,6-xylyl)-DL-alaninat [CAS RN 71626-11-4], Metalaxyl, Methyl *N*-(methoxyacetyl)-*N*-(2,6-xylyl)-DL-alaninat (GB 15 00 581);
Mefenoxam, Methyl-N-(methoxyacetyl)-N-(2,6-xylyl)-D-alaninat (WO 96/01559);
Ofurace, (*RS*)-α-(2-Chlor-*N*-2,6-xylylacetamido)-γ-butyrolacton [CAS RN 58810-48-3];
Oxadixyl; *N*-(2,6-Dimethylphenyl)-2-methoxy-*N*-(2-oxo-3-oxazolidinyl)acetamid;
Spiroxamin, (8-tert-Butyl-1,4-dioxa-spiro[4.5]dec-2-yl)-diethyl-amin (EP-A 281 842);
Pyrimethanil, 4,6-Dimethyl-pyrimidin-2-yl)-phenyl-amin (DD-A 151 404);
Mepanipyrim, (4-Methyl-6-prop-1-inyl-pyrimidin-2-yl)-phenyl-amin (EP-A 224 339);
Cyprodinil, (4-Cyclopropyl-6-methyl-pyrimidin-2-yl)-phenyl-amin (EP-A 310 550);

Iprodion, 3-(3,5-Dichlor-phenyl)-2,4-dioxo-imidazolidin-1-carbonsäureisopropylamid (GB 13 12 536);
Procymidon, *N*-(3,5-Dichlorphenyl)-1,2-dimethylcyclopropan-1,2-dicarboximid (US 3 903 090);
Vinclozolin, 3-(3,5-Dichlor-phenyl)-5-methyl-5-vinyl-oxazolidin-2,4-dion (DE-OS 22 07 576);
Dimethomorph, 3-(4-Chlorphenyl)-3-(3,4-dimethoxyphenyl)-1-morpholin-4-yl-propenon (EP-A 120 321);
Flumetover, 2-(3,4-Dimethoxyphenyl)-*N*-ethyl-α,α,α-trifluor-*N*-methyl-*p*-toluamid [CAS RN 154025-04-4];
Flumorph, 3-(4-Fluorphenyl)-3-(3,4-dimethoxyphenyl)-1-morpholin-4-yl-propenon (EP-A 860 438);
Ferbam, Eisen(3+)dimethyldithiocarbamat (US 1 972 961);
Nabam, Dinatrium Ethylenbis(dithiocarbamat) (US 2 317 765);
Maneb, Mangan-ethylenbis(dithiocarbamat) (US 2 504 404);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Polycarbamat;
Thiram, Bis(dimethylthiocarbamoyl)disulfid (DE 642 532);
Ziram, Dimethyldithiocarbamat;
Zineb, Zink-ethylenbis(dithiocarbamat) (US 2 457 674);
Benomyl, 2-Acetylamino-benzoimidazol-1-carbonsäurebutylamid (US 3 631 176);
Boscalid, 2-Chlor-*N*-(4'-chlorbiphenyl-2-yl)nicotinamid (EP-A 545 099);
Carbendazim, (1 H-Benzoimidazol-2-yl)-carbaminsäuremethylester (US 3 657 443);
Dithianon, 5,10-Dioxo-5,10-dihydro-naphtho[2,3-b][1,4]dithiin-2,3-dicarbonitril (GB 857 383);
Famoxadon, (*RS*)-3-Anilino-5-methyl-5-(4-phenoxyphenyl)-1,3-oxazolidin-2,4-dion ;
Fenamidon, (*S*)-1-Anilino-4-methyl-2-methylthio-4-phenylimidazolin-5-on ;
Picobenzamid, 2,6-Dichlor-N-(3-chlor-5-trifluormethyl-pyridin-2-ylmethyl)-benzamid (WO 99/42447);
Proquinazid, 6-Jodo-2-propoxy-3-propylquinazolin-4(3*H*)-on (WO 97/48684);
Quinoxyfen, 5,7-Dichlor-4-(4-fluor-phenoxy)-chinolin (US 5 240 940);
Thiophanat-methyl, 1,2-Phenylenbis(iminocarbonothioyl)bis(dimethylcarbamat) (DE-OS 19 30 540);
Triforine, *N,N'*-{Piperazine-1,4-diylbis[(trichlormethyl)methylen]}diformamid (DE 19 01 421);
Schwefel;
Bordeaux Brühe ist die Mischung von Calciumhydroxid und Kupfer (II)sulfat;
Kupferacetat; Kupferoxychlorid; basisches Kupfersulfat;
Dinocap, die Mischung aus 2,6-Dinitro-4-octylphenylcrotonat und 2,4-Dinitro-6-octyl-phenylcrotonat, wobei "Octyl" eine Mischung aus 1-Methylheptyl, 1-Ethylhexyl und 1-Propylpentyl bedeutet (US 2 526 660);
Fenpiclonil, 4-(2,3-Dichlor-phenyl)-1H-pyrrol-3-carbonitril (Proc. 1988 Br. Crop Prot. Conf. - Pests Dis., Bd. 1, S. 65);
Fludioxonil, 4-(2,2-Difluor-benzo[1,3]dioxol-4-yl)-1H-pyrrol-3-carbonitril (The Pecticide Manual, Hrsg. The British Crop Protection Council, 10. Aufl. (1995), S. 482);
Captafol, *N*-(1,1,2,2-Tetrachloroethylthio)cyclohex-4-en-1,2-dicarboximid [CAS RN 2425-06-1];
Dichlofluanid, N-Dichlorfluormethylthio-*N',N'*-dimethyl-*N*-phenylsulfamid (DE 11 93 498);
Tolylfluanid, *N*-Dichlorfluormethylthio-*N',N'*-dimethyl-*N*-*p*-tolylsulfamid (DE 11 93 498);
Benthiavalicarb, {(S)-1-[(1R)-1-(6-Fluor-benzothiazol-2-yl)-ethylcarbamoyl]-2-methylpropyl}-carbaminsäureisopropylester (JP-A 09/323 984);
Chlorothalonil, 2,4,5,6-Tetrachlor-isophthalonitril (US 3 290 353);
Cyflufenamid, (*Z*)-*N*-[α-(Cyclopropylmethoxyimino)-2,3-difluor-6-(trifluormethyl)benzyl]-2-phenylacetamid (WO 96/19442);
Diclofluanid, N-Dichlorfluormethylthio-N',N'-dimethyl-N-phenylsulfonamid (DE-AS 11 93 498);
Diethofencarb, Isopropyl 3,4-diethoxycarbanilat [CAS RN 87130-20-9];
Ethaboxam, *N*-(Cyano-2-thienylmethyl)-4-ethyl-2-(ethylamino)-5-thiazolcarboxamid (EP-A 639 574);
Fenhexamid, N-(2,3-dichlor-4-hydroxyphenyl)-1-methylcyclohexancarboxamid (Proc. Br. Crop Prot. Conf. - Pests Dis., 1998, Bd. 2, S. 327);
Fluazinam, 3-Chlor-N-[3-chlor-2,6-dinitro-4-(fifluoromethyl)phenyl]-5-(trifluormethyl)-2-pyridin-amin (The Pecticide Manual, Hrsg. The British Crop Protection Council, 10. Aufl. (1995), S. 474);
Iprovalicarb, [(1S)-2-Methyl-1-(1-p-tolyl-ethylcarbamoyl)-propyl]-carbaminsäure-isopropylester (EP-A 472 996);
Mandipropamid, (RS)-2-(4-Chlorphenyl)-N-[3-methoxy-4-(prop-2-inyloxy)phenethyl]-2-(prop-2-inyloxy)acetamid [CAS-RN 374726-62-2];
Metrafenon, 3'-Brom-2,3,4,6'-tetramethoxy-2',6-dimethylbenzophenon (US 5 945 567);
Zoxamid, (*RS*)-3,5-Dichlor-*N*-(3-chlor-1-ethyl-1-methyl-2-oxopropyl)-*p*-toluamid [CAS RN 156052-68-5].

Die nach IUPAC benannten Verbindungen, ihre Herstellung und ihre fungizide Wirkung sind ebenfalls bekannt:

2-(ortho-((2,5-Dimethylphenyl-oxymethylen)phenyl)-3-methoxy-acrylsäuremethylester (EP-A 226 917);
4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-y1)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid (WO 03/066609);
5-Chlor-7-(4-methyl-piperidin-1-yl)-6-(2,4,6-trifluor-phenyl)-[1,2,4]triazolo[1,5-a]pyrimidin (vgl. WO 98/46607);
3-(3-Brom-6-fluor-2-methyl-indol-1-sulfonyl)-[1,2,4]triazol-1-sulfonsäuredimethylamid (vgl. EP-A 10 31 571; JP-A 2001-192 381);
Thiophenderivate der Formel II-A (vgl. JP 10130268);
Oximetherderivate der Formel III (vgl. WO 99/14188);
Phenylamidinderivate der Formel IV (vgl. WO 00/46184);
Verbindungen der Formel V (vgl. WO 97/48684; WO 02/094797).

In den für Formeln II-A bis V angegebenen Definitionen der Symbole wurden Sammelbegriffe verwendet, die für die folgenden Substituenten stehen:

Halogen: Fluor, Chlor, Brom und Jod;

Alkyl: gesättigte, geradkettige oder verzweigte Kohlenwasserstoffreste mit 1 bis 4 Kohlenstoffatomen, z.B. $C_1$-$C_4$-Alkyl wie Methyl, Ethyl, Propyl, 1-Methylethyl, Butyl, 1-Methyl-propyl, 2-Methylpropyl, 1,1-Dimethylethyl;

Halogenalkyl: geradkettige oder verzweigte Alkylgruppen mit 1 oder 2 Kohlenstoffatomen (wie vorstehend genannt), wobei in diesen Gruppen teilweise oder vollständig die Wasserstoffatome durch Halogenatome wie vorstehend genannt ersetzt sein können: insbesondere $C_1$-$C_2$-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl oder 1,1,1-Trifluorprop-2-yl.

In einer bevorzugten Ausführungsform der Erfindung liegen Mischungen von Menadione mit 5-Chlor-7-(4-methyl-piperidin-1-yl)-6-(2,4,6-trifluor-phenyl)-[1,2,4]triazolo[1,5-a]pyrimidin (Verbindung A) vor.
In einer anderen Ausführungsform der Erfindung liegen Mischungen von Menadione mit mindestens einer Verbindung der Formel II-A vor.
In Formel II-A sind die folgenden Bedeutungen der Substituenten für sich allein oder in Kombination bevorzugt:

Ar bedeutet bevorzugt Phenyl oder einen fünfgliedriger aromatischer Heterocyclus, insbesondere ein fünfgliederiger Heteroarylrest, welcher unsubstituiert ist oder durch eine oder zwei Gruppen $R^{21}$ substituiert ist.

Daneben steht Ar bevorzugt für folgende Gruppen: Phenyl, Pyridin, Pyrazin, Furan, Thiophen, Pyrazol und Thiazol. Besonders bevorzugte Gruppen Ar sind: 3-Pyridinyl, Pyrazinyl, 3-Furyl, 3-Thiophenyl, 4-Pyrazolyl, 5-Thiazolyl.
Besonders bevorzugt steht eine Gruppe $R^{21}$ in ortho-Stellung zu der Amidgruppierung.
Bevorzugte Gruppen $R^{21}$ sind Halogen, insbesondere Chlor, Alkyl, insbesondere Methyl, und Halogenmethyl, insbesondere Fluormethyl, Difluormethyl oder Trifluormethyl. Bevorzugte Gruppen R sind Alkylgruppen, insbesondere verzweigte $C_3$-$C_8$-Alkylgruppen, insbesondere 4-Methyl-pent-2-yl.
Für die bestimmungsgemäße Verwendung in Mischung mit der Verbindung I kommen insbesondere folgende Verbindungen der Formel II-A in Frage:

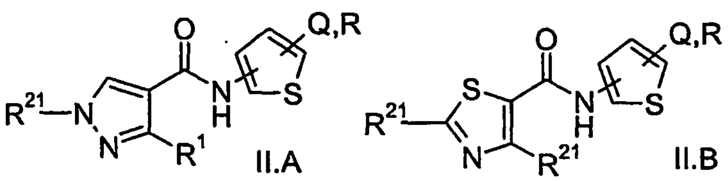

II.A II.B

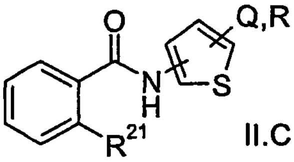
II.C

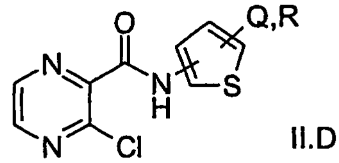
II.D

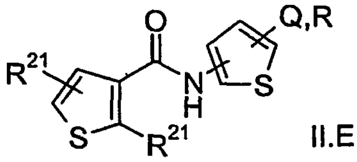
II.E

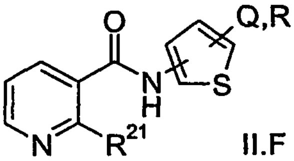
II.F

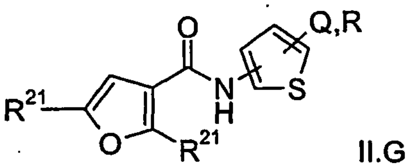
II.G

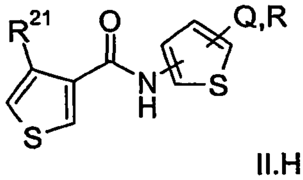
II.H

Sofern zwei Gruppen $R^{21}$ in einer Formel vorliegen, können diese Gruppen gleich oder verschieden sein.

Besonders bevorzugt sind Verbindungen II.A, insbesondere Verbindungen der Formeln II.A.1 und II.B.1, in denen $R^{21}$ gleich oder verschieden sein können und für Methyl und Halogenmethyl und R für Alkyl steht, wie verzweigtes $C_3$-$C_8$-Alkyl, insbesondere 4-Methyl-pent-2-yl:

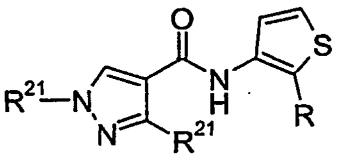
II.A.1

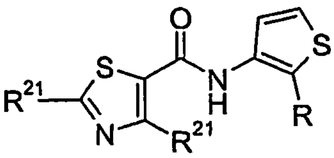
II.B.1

Insbesondere bevorzugt sind Verbindung II.A.11 und II.B.11, welche in Form ihrer Rund S-Isomere vorliegen:

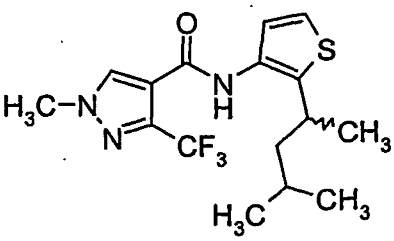
II.A.11

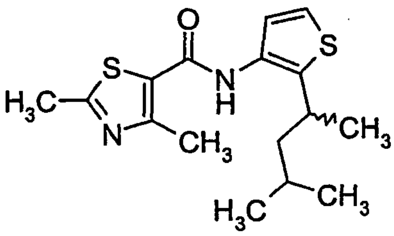
II.B.11

In einer weiteren Ausgestaltung der Erfindung liegen Mischungen von Menadione mit mindestens einem Oximetherderivat der Formel III,

Unter den Verbindungen der Formel III sind solche bevorzugt, bei denen X für eine Difluormethoxygruppe steht. Daneben sind Verbindungen der Formel III besonders bevorzugt, in denen der Index n gleich Null ist.

Besonders bevorzugte Verbindungen III sind insbesondere die in der nachfolgenden Tabelle III aufgeführten Verbindungen:

Tabelle III

| Nr. | X | $R_n$ |
|---|---|---|
| III-1 | $OCF_3$ | H |
| III-2 | $OCHF_2$ | H |
| III-3 | $OCH_2F$ | H |
| III-4 | $OCF_3$ | 4-$OCH_3$ |
| III-5 | $OCHF_2$ | 4-$OCH_3$ |

(fortgesetzt)

| Nr. | X | $R_n$ |
|---|---|---|
| III-6 | $OCH_2F$ | $4\text{-}OCH_3$ |
| III-7 | $OCF_3$ | 4-F |
| III-8 | $OCHF_2$ | 4-F |
| III-9 | $OCH_2F$ | 4-F |
| III-10 | $OCF_3$ | 4-Cl |
| III-11 | $OCHF_2$ | 4-Cl |
| III-12 | $OCH_2F$ | 4-Cl |
| III-13 | $OCF_3$ | $4\text{-}CH_3$ |
| III-14 | $OCHF_2$ | $4\text{-}CH_3$ |
| III-15 | $OCH_2F$ | $4\text{-}CH_3$ |
| III-16 | $OCF_3$ | $4\text{-}CF_3$ |
| III-17 | $OCHF_2$ | $4\text{-}CF_3$ |
| III-18 | $OCH_2F$ | $4\text{-}CF_3$ |
| III-19 | $OCF_3$ | $4\text{-}CF_3$ |

Insbesondere bevorzugt ist die Verbindung III-2.

In einer weiteren Ausgestaltung der Erfindung liegen Mischungen von Menadione mit mindestens einer Verbindung der Formel IV vor.

Im Hinblick auf ihre bestimmungsgemäße Verwendung der Verbindungen IV sind die folgenden Bedeutungen der Substituenten, und zwar jeweils für sich allein oder in Kombination, besonders bevorzugt:

$R^{41}$ bedeutet Wasserstoff;
$R^{42}$ bedeutet $C_1$-$C_6$-Alkyl, wie Methyl und Ethyl, insbesondere Methyl,
$R^{43}$ bedeutet $C_1$-$C_6$-Alkyl, wie Methyl und Ethyl, insbesondere Ethyl;
$R^{44}$ bedeutet $C_1$-$C_6$-Alkyl, insbesondere Methyl;
$R^{45}$ bedeutet $C_1$-$C_6$-Alkyl, insbesondere Methyl;
m bedeutet 1, wobei $R^{45}$ in para-Stellung zu $R^{44}$ steht;
A bedeutet Sauerstoff (-O-);
$R^{46}$ bedeutet Phenyl, welches bevorzugt unsubstituiert oder durch eine bis drei Gruppen $R^f$, insbesondere durch eine oder zwei Gruppen $R^f$, substituiert ist;
$R^f$ bedeutet Halogen, insbesondere Fluor oder Chlor, Alkyl, insbesondere Methyl, Ethyl, n- und iso-Propyl und tert. Butyl und Halogenalkyl, insbesondere Trifluormethyl.

Die Gruppen $R^f$ stehen bevorzugt in 3- oder 3,4-Stellung.

Für die bestimmungsgemäße Verwendung in Mischung mit Menadione kommen insbesondere die in der folgenden Tabelle IV genannten Verbindungen der Formel IV.A in Frage:

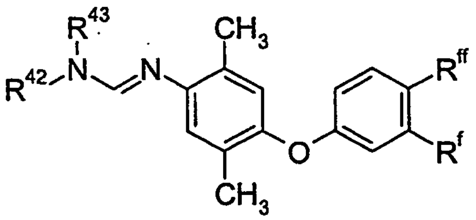

IV.A

Tabelle IV

| Nr. | $R^{62}$ | $R^{63}$ | $R^f$ | $R^{ff}$ |
|---|---|---|---|---|
| IV-1 | $CH_3$ | $CH_2CH_3$ | $CF_3$ | Cl |
| IV-2 | $CH_3$ | $CH_2CH_3$ | $CF_3$ | F |
| IV-3 | $CH_3$ | $CH_3$ | $CF_3$ | H |
| IV-4 | $CH_2CH_3$ | $CH_2CH_3$ | $CF_3$ | H |
| IV-5 | $CH_3$ | $CH_3$ | $C(CH_3)_3$ | H |
| IV-6 | $CH_2CH_3$ | $CH_2CH_3$ | $C(CH_3)_3$ | H |
| IV-7 | $CH_3$ | $CH_3$ | $C_6H_5$-O- | H |
| IV-8 | $CH_2CH_3$ | $CH_2CH_3$ | $C_6H_5$-O- | H |
| IV-9 | $CH_3$ | $CH_3$ | Cl | Cl |
| IV-10 | $CH_2CH_3$ | $CH_2CH_3$ | Cl | Cl |

In einer anderen Ausführungsform der Erfindung liegen Mischungen von Menadione mit mindestens einer Verbindung der Formel V vor.

Verbindungen der Formel V sind bevorzugt, in denen $R^{51}$ für n-Propyl oder n-Butyl, insbesondere für n-Propyl steht.

Daneben sind Verbindungen der Formel V besonders bevorzugt, in denen $R^{53}$ für Jod oder Brom, insbesondere für Iod steht.

Die Formel V repräsentiert insbesondere Verbindungen der Formeln V.1, V.2 und V.3:

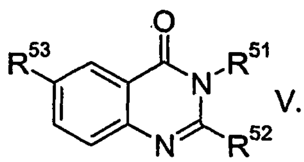 V.1 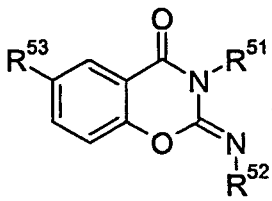 V.2 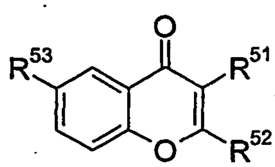 V.3

in denen die Variablen die für Formel V gegebene Bedeutung haben.

Die Verbindung der Formel V.1, in der $R^{51}$ n-Propyl, $R^{52}$ n-Propoxy und $R^{53}$ Iod bedeuten, ist auch unter dem common name Proquinazid bekannt (Verbindung V.1-1). Mischungen von Menadione und Proquinazid, sind eine bevorzugte Ausgestaltung der Erfindung.

Daneben sind auch Mischungen, enthaltend die Verbindung der Formel I und eine Verbindung der Formel V. 2, eine bevorzugte Ausgestaltung der Erfindung.

Insbesondere sind die Mischungen mit der Verbindung I und einer der folgenden Verbindungen der Formel V. 2 bevorzugt:

| Nr. | $R^{51}$ | $R^{52}$ | $R^{53}$ |
|---|---|---|---|
| V.2-1 | $CH_2CH_2CH_3$ | $OCH_3$ | I |
| V.2-2 | $CH_2CH_2CH_2CH_3$ | $OCH_2CH_3$ | I |
| V.2-3 | $CH_2CH_2CH_3$ | $OCH_2CH_3$ | I |
| V.2-4 | $CH_2CH_2CH_3$ | $OCH(CH_3)_2$ | I |

Eine weitere bevorzugte Ausgestaltung der Erfindung betrifft Mischungen der Verbindung I und einer der folgenden Verbindungen der Formel V.3:

| Nr. | $R^{51}$ | $R^{52}$ | $R^{53}$ |
|---|---|---|---|
| V.3-1 | $CH_2CH_2CH_3$ | $OCH_3$ | I |

(fortgesetzt)

| Nr. | $R^{51}$ | $R^{52}$ | $R^{53}$ |
|---|---|---|---|
| V.3-2 | $CH_2CH_2CH_2CH_3$ | $OCH_2CH_3$ | I |
| V.3-3 | $CH_2CH_2CH_3$ | $OCH_2CH_3$ | I |
| V.3-4 | $CH_2CH_2CH_3$ | $OCH(CH_3)_2$ | I |
| V.3-5 | $CH_2CH_2CH_3$ | $OCH_2CH_2CH_3$ | I |
| V.3-6 | $CH_2CH_2CH_3$ | $OCH_2CH_2CH_2CH_3$ | I |
| V.3-7 | $CH_2CH_2CH_3$ | $OCH_3$ | Br |
| V.3-8 | $CH_2CH_2CH_2CH_3$ | $OCH_2CH_3$ | Br |
| V.3-9 | $CH_2CH_2CH_3$ | $OCH_2CH_3$ | Br |
| V.3-10 | $CH_2CH_2CH_3$ | $OCH(CH_3)_2$ | Br |
| V.3-11 | $CH_2CH_2CH_3$ | $OCH_2CH_2CH_3$ | Br |
| V.3-12 | $CH_2CH_2CH_3$ | $OCH_2CH_2CH_2CH_3$ | Br |

Mischungen der Verbindung I mit Verbindungen V.3-6 oder V.3-12, insbesondere V.3-6, sind dabei besonders bevorzugt.

Eine weitere bevorzugte Ausführung der erfindungsgemäßen Mischungen betrifft die Kombination von Menadione und Strobilurinen, wie Azoxystrobin, Fluoxastrobin, Kresoxim-Methyl, Orysastrobin, Picoxystrobin, Pyraclostrobin oder Trifloxystrobin, insbesondere von Azoxystrobin, Fluoxastrobin, Pyraclostrobin oder Trifloxystrobin.

Eine weitere bevorzugte Ausführung der erfindungsgemäßen Mischungen betrifft die Kombination von Menadione und Acylalaninen wie Benalaxyl, Metalaxyl, Mefenoxam, Ofurace oder Oxadixyl.

Eine weitere bevorzugte Ausführung der erfindungsgemäßen Mischungen betrifft die Kombination von Menadione und Zimtsäureamide und Analoge wie Dimethomorph, Flumetover oder Flumorph.

Eine weitere bevorzugte Ausführung der erfindungsgemäßen Mischungen betrifft die Kombination von Menadione und heterocylische Verbindungen wie Dithianon, Picobenzamid, Thiophanat-methyl oder Triforine.

Eine weitere bevorzugte Ausführung der erfindungsgemäßen Mischungen betrifft die Kombination von Menadione und Schwefel oder Kupferfungizide wie Bordeaux Brühe, Kupferacetat, Kupferoxychlorid, basisches Kupfersulfat.

Eine weitere bevorzugte Ausführung der erfindungsgemäßen Mischungen betrifft die Kombination von Menadione und einen Wirkstoff aus Captafol, Dichlofluanid, Tolylfluanid, Benthiavalicarb, Chlorothalonil, Cyflufenamid, Diclofluanid, Diethofencarb, Ethaboxam, Fenhexamid, Fluazinam, Iprovalicarb, Metrafenon und Zoxamid.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel als weitere Aktivkomponenten beimischen kann.

Üblicherweise kommen Mischungen von Menadione mit einem Wirkstoff aus den Gruppen A) bis O) zur Anwendung. Unter Umständen können jedoch Mischungen von Menadione mit zwei oder ggf. mehreren Aktivkomponenten vorteilhaft sein.

Als weitere Aktivkomponenten im voranstehenden Sinne kommen besonders die eingangs genannten Wirkstoffe aus den Gruppen A) bis O) und insbesondere die voranstehend genannten bevorzugten Wirkstoffe in Frage.

Menadione und der Wirkstoff aus der Gruppe A) bis O) werden üblicherweise in einem Gewichtsverhältnis von 50000:1 bis 1:100, vorzugsweise 20000:1 bis 1:1, insbesondere 1000:1 bis 1:10 angewandt.

Die weiteren Aktivkomponenten werden gewünschtenfalls im Verhältnis von 20:1 bis 1:20 zu dem Wirkstoff aus der Gruppe A) bis O) zugemischt.

Die Aufwandmengen der erfindungsgemäßen Mischungen liegen je nach Art der Verbindung und des gewünschten Effekts bei 50 g/ha bis 5000 g/ha, vorzugsweise 100 bis 1500 g/ha, insbesondere 150 bis 1500 g/ha.

Die Aufwandmengen für Menadione liegen entsprechend in der Regel bei 50 bis 5000 g/ha, vorzugsweise 100 bis 2500 g/ha, insbesondere 100 bis 1500 g/ha.

Die Aufwandmengen für den Wirkstoff aus den Gruppen A) bis O) liegen entsprechend in der Regel bei 1 bis 2000 g/ha, vorzugsweise 10 bis 900 g/ha, insbesondere 40 bis 500 g/ha.

Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen erfolgt durch die getrennte oder gemeinsame Applikation von Menadione und des Wirkstoffs II aus den Gruppen A) bis O) oder der Mischungen aus Menadione und des Wirkstoffs aus den Gruppen A) bis O) durch Besprühen oder Bestäuben der Samen, der Pflanzen oder der Böden vor oder nach der Aussaat der Pflanzen oder vor oder nach dem Auflaufen der Pflanzen.

In einer bevorzugten Ausführung des erfindungsgemäßen Verfahrens erfolgt die Applikation von Menadione und des Wirkstoffs II aus den Gruppen A) bis O) nacheinander, insbesondere erfolgt die Applikation von Menadione ein bis 15 Tage vor der Applikation des Wirkstoffs aus den Gruppen A) bis O).

Das Verfahren zur Verstärkung der fungiziden Wirksamkeit von synthetischen Wirkstoffen erfolgt durch getrennte oder gemeinsame Applikation von Menadione und dem synthetischen Wirkstoff durch Besprühen oder Bestäuben der Samen, der Pflanzen oder der Böden vor oder nach der Aussaat der Pflanzen oder vor oder nach dem Auflaufen der Pflanzen in den voranstehend beschriebenen Mengen.

Die erfindungsgemäßen Mischungen, bzw. Menadione und der Wirkstoff II aus den Gruppen A) bis O) können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, acyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Lößß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Für die Saatgutbehandlung ergeben die betreffenden Formulierungen nach zwei- bis zehnfacher Verdünnung Wirkstoffkonzentrationen von 0,01 bis 60 Gew.-%, bevorzugt 0,1 bis 40 Gew.-% in den fertig verwendbaren Zubereitungen.

Beispiele für erfindungsgemäße Formulierungen sind:

1. Produkte zur Verdünnung in Wasser

A Wasserlösliche Konzentrate (SL, LS)
10 Gew.-Teile der Wirkstoffe werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit 10 Gew.-% Wirkstoffgehalt.
B Dispergierbare Konzentrate (DC)
20 Gew.-Teile der Wirkstoffe werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%
C Emulgierbare Konzentrate (EC)
15 Gew.-Teile der Wirkstoffe werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat 15 Gew.-% Wirkstoffgehalt.
D Emulsionen (EW, EO, ES)
25 Gew.-Teile der Wirkstoffe werden in 35 Gew.-Teile Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.
E Suspensionen (SC, OD, FS)
20 Gew.-Teile der Wirkstoffe werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-%.
F Wasserdispergierbare und wasserlösliche Granulate (WG, SG)
50 Gew.-Teile der Wirkstoffe werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.
G Wasserdispergierbare und wasserlösliche Pulver (WP, SP, SS, WS)
75 Gew.-Teile der Wirkstoffe werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.
H Gelformulierungen
In einer Kugelmühle werden 20 Gew.-Teile der Wirkstoffe, 10 Gew.-Teile Dispergiermittel, 1Gew.-Teil Geliermittel und 70 Gew.-Teile Wasser oder eines organischen Lösungsmittels zu einer feinen Suspension vermahlen. Bei der Verdünnung mit Wasser ergibt sich eine stabile Suspension mit 20 Gew.-% Wirkstoffgehalt.

2. Produkte für die Direktapplikation

I Stäube (DP, DS)
5 Gew.-Teile der Wirkstoffe werden fein gemahlen und mit 95 Gew.-Teilen feinteiligem Kaolin innig vermischt. Man erhält dadurch ein Stäubemittel mit 5 Gew.-% Wirkstoffgehalt.

J Granulate (GR, FG, GG, MG)
0,5 Gew-Teile der Wirkstoffe werden fein gemahlen und mit 99,5 Gewichtsteilen Trägerstoffe verbunden. Gängige Verfahren sind dabei die Extrusion, die Sprühtrocknung oder die Wirbelschicht. Man erhält dadurch ein Granulat für die Direktapplikation mit 0,5 Gew.-% Wirkstoffgehalt.

K ULV- Lösungen (UL)
10 Gew.-Teile der Wirkstoffe werden in 90 Gew.-Teilen eines organischen Lösungsmittel z.B. Xylol gelöst. Dadurch erhält man ein Produkt für die Direktapplikation mit 10 Gew.-% Wirkstoffgehalt.

Für die Saatgutbehandlung werden üblicherweise wasserlösliche Konzentrate (LS), Suspensionen (FS), Stäube (DS), wasserdispergierbare und wasserlösliche Pulver (WS, SS), Emulsionen (ES), emulgierbare Konzentrate (EC) und Gelformulierungen (GF) verwendet. Diese Formulierungen können auf das Saatgut unverdünnt oder, bevorzugt, verdünnt angewendet werden. Die Anwendung kann vor der Aussaat erfolgen.

Bevorzugt werden FS Formulierungen für die Saatgutbehandlung verwendet. Üblicherweise enthalten solche

Formulierungen 1 bis 800 g/l Wirkstoff, 1 bis 200 g/l Tenside, 0 bis 200 g/l Frostschutzmittel, 0 bis 400 g/l Bindemittel, 0 bis 200 g/l Farbstoffe und Lösungsmittel, vorzugsweise Wasser.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:100 bis 100:1, bevorzugt 1:10 bis 10:1 zugemischt werden.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

α entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel: $$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1 - Protektive Wirksamkeit gegen Reisbrand verursacht durch *Pyricularia oryzae*

Blätter von in Töpfen gewachsenen Reiskeimlingen der Sorte "Tai-Nong 67" wurden mit wässriger Suspension in den unten angegebenen Wirkstoffkonzentrationen bis zur Tropfnässe mit Menadione und nach 6 Tagen mit Pyraclostrobin behandelt. Ein Tag nach der letzten Behandlung wurden die Pflanzen mit einer wässrigen Sporensuspension von *Pyricularia oryzae* inokuliert. Anschließend wurden die Versuchspflanzen in Feuchtekammern bei 22 bis 24°C und 95 bis 99 % relativer Luftfeuchtigkeit für 6 Tage aufgestellt. Dann wurde das Ausmaß der Befallsentwicklung auf den Blättern visuell ermittelt.

| Nr. | Wirkstoff | Konz. [ppm] | Verhältnis | Beobachtete Wirkung (%) | Berechnete Wirkung nach Colby (%) |
|---|---|---|---|---|---|
| 1 | - (Kontrolle) | - | | 0 (100% Befall) | |
| 2 | Menadione (I) | 250 | | 0 | |
| 3 | Pyraclostrobin (B8) | 1 | | 20 | |
| 4 | I + B8 | 250+1 | 250:1 | 95 | 20 |

Anwendungsbeispiel 2 - Protektive Wirksamkeit gegen *Puccinia recondita* an Weizen (Weizenbraunrost)

Weizensämlinge der Sorte "Kanzler" in Töpfen mit 8 cm Durchmesser wurden zunächst mit 2 ml einer wässriger Suspension, die 71 mg Menadione enthielt, gegossen und 6 Tage später mit einem weiteren Wirkstoff in der unten angegebenen Wirkstoffkonzentration bis zur Tropfnässe besprüht. Am folgenden Tag wurden die Pflanzen mit einer Sporensuspension des Weizenbraunrostes (*Puccinia recondita*) inokuliert. Anschließend wurden die Pflanzen für 24 Stunden in eine Kammer mit hoher Luftfeuchtigkeit (90 bis 95 %) bei 20 bis 22°C gestellt. Während dieser Zeit keimten die Sporen aus und die Keimschläuche drangen in das Blattgewebe ein. Am folgenden Tag wurden die Versuchspflanzen ins Gewächshaus zurückgestellt und bei Temperaturen zwischen 20 und 22°C und 65 bis 70 % relativer Luftfeuchte für weitere 7 Tage kultiviert. Dann wurde das Ausmaß der Rostpilzentwicklung auf den Blättern visuell ermittelt.

| Nr. | Wirkstoff | Konz. | Verhältnis | Beobachtete Wirkung (%) | Berechnete Wirkung nach Colby (%) |
|---|---|---|---|---|---|
| 5 | - (Kontrolle) | - | | 0 (100% Befall) | |
| 6 | Menadione (I) | 3,6 % | | 0 | |
| 7 | Verbindung A* | 4 ppm | | 25 | |
| 8 | I + A* | 3,6%+4ppm | 40000:1** | 50 | 25 |

* 5-Chlor-7-(4-methyl-piperidin-1-yl)-6-(2,4,6-trifluor-phenyl)-[1,2,4]triazolo[1,5-a]pyrimidin
** Auf die Pflanze aufgebrachte Menge: ca. 0,5 ml Wirkstofflösung

Anwendungsbeispiel 3 - Wirksamkeit gegen die Netzfleckenkrankheit der Gerste verursacht durch *Pyrenophora teres* bei 6 Tage protektiver Anwendung

Blätter von in Töpfen gewachsenen Gerstenkeimlingen wurden mit wäßriger Suspension in der unten angegebenen Wirkstoffkonzentration bis zur Tropfnässe besprüht.

Nach 6 Tagen wurden die Versuchspflanzen mit einer wäßrigen Sporensuspension von *Pyrenophora [syn. Drechslera] teres*, dem Erreger der Netzfleckenkrankheit inokuliert.

Anschließend wurden die Versuchspflanzen im Gewächshaus bei Temperaturen zwischen 20 und 24°C und 95 bis 100 % relativer Luftfeuchtigkeit aufgestellt. Nach 6 Tagen wurde das Ausmaß der Krankheitsentwicklung visuell in % Befall der gesamten Blattfläche ermittelt.

| Nr. | Wirkstoff | Konz. [ppm] | Verhältnis | Beobachtete Wirkung (%) | Berechnete Wirkung nach Colby (%) |
|---|---|---|---|---|---|
| 9 | - (Kontrolle) | - | | 0 (90% Befall) | |
| 10 | Menadione (I) | 63<br>16 | | 0<br>0 | |
| 11 | Iprodione (F1) | 250 | | 22 | |
| 12 | I + F1 | 63 + 250 | 1 : 4 | 67 | 22 |
| 13 | I + F1 | 16 + 250 | 1 : 16 | 44 | 22 |

Anwendungsbeispiel 4 - 6 Tage protektive Wirksamkeit gegen *Puccinia recondita* an Weizen (Weizenbraunrost)

Blätter von in Töpfen gewachsenen Weizensämlingen der Sorte "Kanzler" wurden mit einer wäßriger Suspension in der unten angegebenen Wirkstoffkonzentration bis zur Tropfnässe besprüht. Nach sechs Tagen wurden die behandelten Pflanzen mit einer Sporensuspension des Weizenbraunrostes (*Puccinia recondita*) inokuliert. Anschließend wurden die Pflanzen für 24 Stunden in eine Kammer mit hoher Luftfeuchtigkeit (90 bis 95 %) bei 20 bis 22° C gestellt. Während dieser Zeit keimten die Sporen aus und die Keimschläuche drangen in das Blattgewebe ein. Am folgenden Tag wurden die Versuchspflanzen ins Gewächshaus zurückgestellt und bei Temperaturen zwischen 20 und 22°C und 65 bis 70 % relativer Luftfeuchte für weitere 7 Tage kultiviert. Dann wurde das Ausmaß der Rostpilzentwicklung auf den Blättern visuell ermittelt.

| Nr. | Wirkstoff | Konz. [ppm] | Verhältnis | Beobachtete Wirkung (%) | Berechnete Wirkung nach Colby (%) |
|---|---|---|---|---|---|
| 14 | - (Kontrolle) | - | | 0 (80% Befall) | |
| 15 | Menadione (I) | 16<br>1 | | 25<br>0 | |
| 16 | Boscalid (12) | 63 | | 22 | |
| 17 | Verbindung A | 63 | | 22 | |
| 18 | Epoxiconazole (A3) | 1 | | 22 | |
| 19 | I + I2 | 16 + 63 | 1 : 4 | 50 | 25 |
| 20 | I + A | 16 + 63 | 1 : 4 | 88 | 72 |
| 21 | I + A3 | 1 + 1 | 1:1 | 50 | 0 |

Anwendungsbeispiel 5 - Aktivität gegen die Krautfäule an Tomaten verursacht durch *Phytophthora infestans* bei 6 Tagen protektiver Behandlung

Blätter von getopften Tomatenpflanzen wurden mit einer wäßriger Suspension in der unten angegebenen Wirkstoffkonzentration bis zur Tropfnässe besprüht. Nach 6 Tagen wurden die Blätter mit einer wäßrigen Sporangienaufschwemmung von *Phytophthora infestans* infiziert. Anschließend wurden die Pflanzen in einer wasserdampf-gesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

| Nr. | Wirkstoff | Konz. [ppm] | Verhältnis | Beobachtete Wirkung (%) | Berechnete Wirkung nach Colby (%) |
|---|---|---|---|---|---|
| 22 | - (Kontrolle) | - | | 0 (70% Befall) | |
| 23 | Menadione (I) | 63 | | 27 | |
| 24 | Dimethomorph (G1) | 16 | | 37 | |
| 25 | I + G1 | 63 + 16 | 4:1 | 84 | 37 |

Anwendungsbeispiel 6 - Wirksamkeit gegen Weizenmehltau verursacht durch *Erysiphe [syn. Blumeria] graminis* forma specialis. *Tritici* bei 6 Tage protektiver Anwendung

Blätter von in Töpfen gewachsenen Weizenkeimlingen der Sorte "Kanzler" wurden mit wäßriger Suspension in der unten angegebenen Wirkstoffkonzentration bis zur Tropfnässe besprüht. Die Suspension oder Emulsion wurde wie oben beschrieben hergestellt. 6 Tage nach dem Applizieren des Wirkstoffes wurden die Pflanzen mit Sporen des Weizenmehltaus (*Erysiphe [syn. Blumeria] graminis* forma specialis. *tritici*) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

| Nr. | Wirkstoff | Konz. [ppm] | Verhältnis | Beobachtete Wirkung (%) | Berechnete Wirkung nach Colby (%) |
|---|---|---|---|---|---|
| 26 | - (Kontrolle) | - | | 0 (90% Befall) | |
| 27 | Menadione (I) | 16 | | 0 | |
| 28 | Metiram (H5) | 63 | | 0 | |
| 29 | Metrafenon (O11) | 63 | | 67 | |
| 30 | I + H5 | 16+63 | 1:4 | 67 | 0 |
| 31 | I + O11 | 16+63 | 1:4 | 100 | 67 |

Aus den Ergebnissen der Versuche geht hervor, dass die erfindungsgemäßen Kombinationen aufgrund des starken Synergismus erheblich besser wirksam sind, als nach der Colby-Formel vorausberechnet.

## Patentansprüche

**1.** Verwendung von Menadione der Formel I,

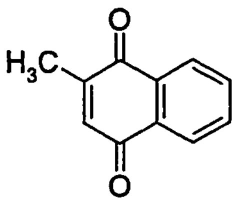

I

oder eines seiner pflanzenverträglichen Säureadditionssalze zur Verstärkung der Wirksamkeit von Agrochemikalien gegen pflanzenpathogene Pilze.

**2.** Fungizide Mischungen zur Bekämpfung von pflanzenpathogenen Schadpilzen, enthaltend

1) Menadione gemäß Anspruch 1,
und
2) mindestens einen Wirkstoff II ausgewählt aus den folgenden Gruppen:

A) Azole wie Cyproconazol, Difenoconazole, Epoxiconazol, Fluquiconazol, Flusilazol, Hexaconazol, Imazalil, Metconazol, Myclobutanil, Penconazol, Prochloraz, Prothioconazol, Tebuconazol, Triadimefon, Triadimenol, Triflumizol;
B) Strobilurine wie Azoxystrobin, Dimoxystrobin, Fluoxastrobin, Kresoxim-methyl, Metominostrobin, Orysastrobin, Picoxystrobin, Pyraclostrobin, Trifloxystrobin oder 2-(ortho-((2,5-Dimethylphenyloxymethylen) phenyl)-3-methoxy-acrylsäuremethylester;
C) Acylalanine wie Benalaxyl, Metalaxyl, Mefenoxam, Ofurace, Oxadixyl;
D) Aminderivate wie Spiroxamin;

E) Anilinopyrimidine wie Pyrimethanil, Mepanipyrim oder Cyprodinil;
F) Dicarboximide wie Iprodion, Procymidon, Vinclozolin;
G) Zimtsäureamide und Analoge wie Dimethomorph, Flumetover oder Flumorph;
H) Dithiocarbamate wie Ferbam, Nabam, Maneb, Metam, Metiram, Propineb, Polycarbamat, Thiram, Ziram, Zineb;
I) Heterocylische Verbindungen wie Benomyl, Boscalid, Carbendazim, Dithianon, Famoxadon, Fenamidon, Picobenzamid, Proquinazid, Quinoxyfen, Thiophanat-methyl, Triforine, 4-Difluormethyl-2-methylthiazol-5-carbonsäure-(4'-brom-biphenyl-2-yl)-amid, 4-Difluormethyl-2-methyl-thiazol-5-carbonsäure-(4'-trifluörmethyl-biphenyl-2-yl)-amid, 4-Difluormethyl-2-methyl-thiazol-5-carbonsäure-(4'-chlor-3'-fluorbiphenyl-2-yl)-amid, 3-Difluormethyl-1-methyl-pyrazol-4-carbonsäure-(3',4'-dichlor-4-fluor-biphenyl-2-yl)-amid oder 5-Chlor-7-(4-methyl-piperidin-1-yl)-6-(2,4,6-trifluor-phenyl)-[1,2,4]triazolo[1,5-a]pyrimidin, 3-(3-Brom-6-fluor-2-methyl-indol-1-sulfonyl)-[1,2,4]triazol-1-sulfonsäuredimethylamid, Thiophenderivate der Formel II-A,

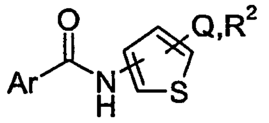
II-A

in der die Variablen folgende Bedeutungen haben:

Ar Phenyl oder ein fünf- oder sechsgliedriger aromatischer Heterocyclus, enthaltend ein bis vier Heteroatome aus der Gruppe O, N oder S, wobei die Cyclen unsubstituiert sind oder durch eine bis drei Gruppen $R^{21}$ substituiert sein können:

$R^{21}$ Halogen, $C_1$-$C_4$-Alkyl oder $C_1$-$C_4$-Halogenalkyl;

$R^2$ Phenyl, $C_1$-$C_8$-Alkyl, $C_1$-$C_8$-Halogenalkyl, $C_1$-$C_8$-Alkoxy, $C_1$-$C_8$-Halogenalkoxy;
Q Wasserstoff, $C_1$-$C_8$-Alkyl, $C_1$-$C_8$-Halogenalkyl, $C_1$-$C_8$-Alkoxy, $C_1$-$C_8$-Halogenalkoxy;

K) Schwefel und Kupferfungizide wie Bordeaux Brühe, Kupferacetat, Kupferoxychlorid, basisches Kupfersulfat;
L) Nitrophenylderivate, wie Dinocap;
M) Phenylpyrrole wie Fenpiclonil oder Fludioxonil;
N) Sulfensäurederivate wie Captafol, Dichlofluanid, Tolylfluanid;
O) Sonstige Fungizide ausgewählt aus Benthiavalicarb, Chlorothalonil, Cyflufenamid, Diclofluanid, Diethofencarb, Ethaboxam, Fenhexamid, Fluazinam, Iprovalicarb, Mandipropamid, Metrafenon, Zoxamid; Oximetherderivate der Formel III,

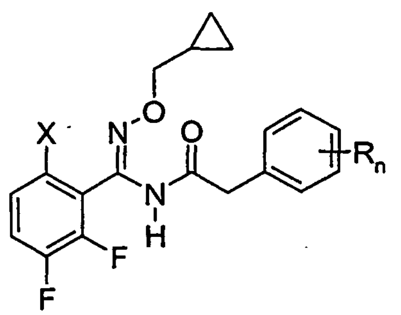
III

in der

X $C_1$-$C_4$-Halogenalkoxy,
n 0, 1, 2 oder 3,
R Halogen, $C_1$-$C_4$-Alkyl, $C_1$-$C_4$-Halogenalkyl, $C_1$-$C_4$-Alkoxy, oder Halogenalkoxy bedeuten; und

Phenylamidinderivate der Formel IV,

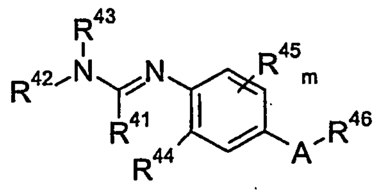

IV

in der die Variablen folgende Bedeutungen haben:

$R^{41}$ Wasserstoff, $C_1$-$C_8$-Alkyl, $C_2$-$C_8$-Alkenyl oder $C_2$-$C_8$-Alkinyl, welche unsubstituiert sind oder durch eine bis drei Gruppen $R^a$ substituiert sein können:

$R^a$ Halogen, $C_1$-$C_8$-Alkoxy, $C_1$-$C_8$-Halogenalkoxy, $C_1$-$C_8$-Alkylthio oder Phenyl, welches substituiert sein kann durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;

$R^{42}$,$R^{43}$ können gleich oder verschieden sein und Wasserstoff, Cyano, $C_1$-$C_8$-Alkyl, $C_2$-$C_8$-Alkenyl, $C_2$-$C_8$-Alkinyl, $C_1$-$C_8$-Alkoxy, $C_1$-$C_8$-Alkoxyalkyl, Benzyloxy oder $C_1$-$C_8$-Alkylcarbonyl, welche unsubstituiert sind oder durch eine bis drei Gruppen $R^a$ substituiert sein können;

$R^{44}$ Wasserstoff, $C_1$-$C_8$-Alkyl, $C_2$-$C_8$-Alkenyl oder $C_2$-$C_8$-Alkinyl, welche unsubstituiert sind oder durch eine bis drei Gruppen $R^b$ substituiert sein können:

$R^b$ eine der bei $R^a$ genannten Gruppen, Cyano, C(=O)$R^c$, C(=S)$R^c$ oder $S(O)_pR^c$,

$R^c$ $C_1$-$C_8$-Alkyl, $C_1$-$C_8$-Halogenalkyl, $C_1$-$C_8$-Alkoxy, $C_1$-$C_8$-Halogenalkoxy, $C_1$-$C_8$-Alkylthio, Amino, $C_1$-$C_8$-Alkylamino, Di($C_1$-$C_8$-alkyl)amino oder Phenyl, welches substituiert sein kann durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;

m 0 oder 1;

$R^{45}$ eine der bei $R^{44}$ genannten Gruppen;

A eine direkte Bindung, -O-, -S-, $NR^d$, $CHR^e$ oder -O-$CHR^e$;

$R^d$,$R^e$ eine der bei $R^a$ genannten Gruppen;

$R^{46}$ Phenyl oder fünf- oder sechsgliedriger gesättigter, partiell ungesättigter oder aromatischer Heterocyclus, enthaltend ein bis vier Heteroatome aus der Gruppe O, N oder S, wobei die Gruppen $R^{46}$ unsubstituiert sind oder durch eine bis drei $R^f$ substituiert sein können:

$R^f$ eine der bei $R^b$ genannten Gruppen oder Amino, $C_1$-$C_8$-Alkylamino, Di($C_1$-$C_8$-alkyl)amino, $C_1$-$C_8$-Halogenalkyl, $C_1$-$C_8$-Alkoxyalkyl, $C_2$-$C_8$-Alkenyloxyalkyl, $C_2$-$C_8$-Alkinyloxyalkyl, $C_1$-$C_8$-Alkylcarbonyloxy-$C_1$-$C_8$-alkyl, Cyanooxy-$C_1$-$C_8$-alkyl, $C_3$-$C_6$-Cycloalkyl oder Phenoxy, wobei die cyclischen Gruppen substituiert sein können durch Halogen, $C_1$-$C_8$-Alkyl, $C_1$-$C_8$-Halogenalkyl, $C_1$-$C_8$-Alkoxy, $C_1$-$C_8$-Halogenalkoxy oder $C_1$-$C_8$-Alkylthio;

Verbindungen der Formel V,

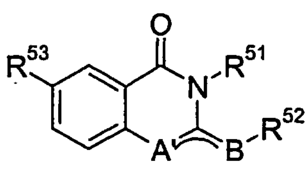

V

in der die Variablen folgende Bedeutung haben:

A' O oder N;

B N, oder eine direkte Bindung;
$R^{51}$ $C_1$-$C_4$-Alkyl;
$R^{52}$ $C_1$-$C_4$-Alkoxy; und
$R^{53}$ Halogen;

in einer synergistisch wirksamen Menge.

**3.** Fungizide Mischungen gemäß Anspruch 2 enthaltend als Komponente 2) mindestens einen Wirkstoff ausgewählt aus den folgenden Gruppen:

A) Azole wie Cyproconazol, Difenoconazole, Epoxiconazol, Fluquiconazol, Flusilazol, Hexaconazol, Imazalil, Metconazol, Myclobutanil, Penconazol, Prochloraz, Prothioconazol, Tebuconazol, Triadimefon, Triadimenol, Triflumizol;
B) Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin;
C) Acylalanine wie Benalaxyl, Metalaxyl, Mefenoxam, Ofurace, Oxadixyl;
D) Aminderivate wie Spiroxamin;
E) Anilinopyrimidine wie Pyrimethanil, Mepanipyrim oder Cyprodinil;
F) Dicarboximide wie Iprodion, Procymidon, Vinclozolin;
G) Zimtsäureamide und Analoge wie Dimethomorph, Flumetover oder Flumorph;
H) Dithiocarbamate wie Ferbam, Nabam, Maneb, Metam, Metiram, Propineb, Polycarbamat, Thiram, Ziram, Zineb;
I) Heterocylische Verbindungen wie Benomyl, Boscalid, Carbendazim, Dithianon, Famoxadon, Fenamidon, Picobenzamid, Proquinazid, Quinoxyfen, Thiophanat-methyl, Triforine, 5-Chlor-7-(4-methyl-piperidin-1-yl)-6-(2,4,6-trifluor-phenyl)-[1,2,4]triazolo[1,5-a]pyrimidin, 3-(3-Brom-6-fluor-2-methyl-indol-1-sulfonyl)-[1,2,4]triazol-1-sulfonsäure-dimethylamid oder
Thiophenderivate der Formel II-A,

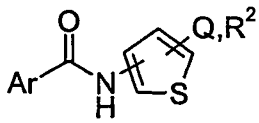

II-A

K) Schwefel und Kupferfungizide wie Bordeaux Brühe, Kupferacetat, Kupferoxychlorid, basisches Kupfersulfat;
L) Nitrophenylderivate, wie Dinocap;
M) Phenylpyrrole wie Fenpiclonil oder Fludioxonil;
N) Sulfensäurederivate wie Captafol, Dichlofluanid, Tolylfluanid;
O) Sonstige Fungizide ausgewählt aus Benthiavalicarb, Chlorothalonil, Cyflufenamid, Diclofluanid, Diethofencarb, Ethaboxam, Fenhexamid, Fluazinam, Iprovalicarb, Metrafenon, Zoxamid;
Oximetherderivate der Formel III,

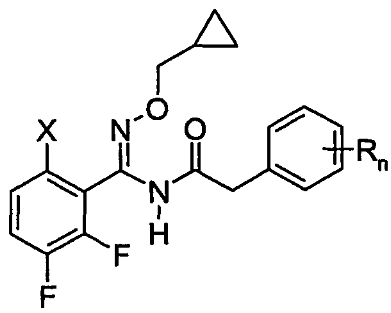

III

Phenylamidinderivate der Formel IV,

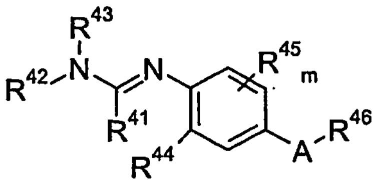

IV

und
Verbindungen der Formel V.

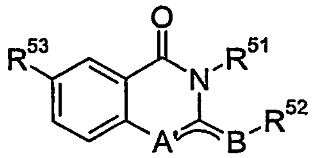

V

4. Fungizide Mischungen gemäß Anspruch 2 oder 3, enthaltend als Aktivkomponente 1 Menadione x $NaHSO_3$ .

5. Fungizide Mischungen gemäß Anspruch 2 oder 3, enthaltend neben Menadione zwei Wirkstoffe aus den Gruppen A) bis O).

6. Fungizide Mischungen gemäß einem der Ansprüche 2 bis 5, enthaltend Menadione und einen Wirkstoff II in einem Gewichtsverhältnis von 100:1 bis 1:100.

7. Mittel, enthaltend einen flüssigen oder festen Trägerstoff und eine Mischung gemäß einem der Ansprüche 2 bis 6.

8. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden oder Saatgut mit einer wirksamen Menge von Menadione gemäß einem der Ansprüche 2 bis 4 und eines Wirkstoffs aus den Gruppen A) bis O) gemäß Anspruch 2 oder 3 behandelt.

9. Verfahren nach Anspruch 8, **dadurch gekennzeichnet, dass** man Menadione gemäß einem der Ansprüche 1 bis 4 und den oder die Wirkstoffe aus den Gruppen A) bis O) gemäß Anspruch 2 oder 3 gleichzeitig, und zwar gemeinsam oder getrennt, oder nacheinander ausbringt.

10. Verfahren nach Ansprüchen 8 oder 9, **dadurch gekennzeichnet, dass** man Menadione gemäß einem der Ansprüche 1 bis 4 und den oder die Wirkstoffe aus den Gruppen A) bis O) gemäß Anspruch 2 oder 3 nacheinander ausbringt.

11. Verfahren nach einem der Ansprüche 8 bis 10, **dadurch gekennzeichnet, dass** man Menadione gemäß einem der Ansprüche 1 bis 4 und den oder die Wirkstoffe aus den Gruppen A) bis O) gemäß Anspruch 2 oder 3 oder die Mischungen gemäß einem der Ansprüche 2 bis 5 in einer Menge von 5 g/ha bis 2000 g/ha aufwendet.

12. Verfahren nach Ansprüchen 8 oder 9, **dadurch gekennzeichnet, dass** man Menadione gemäß einem der Ansprüche 1 bis 4 und den oder die Wirkstoffe aus den Gruppen A) bis O) gemäß Anspruch 2 oder 3 oder die Mischung gemäß einem der Ansprüche 2 bis 6 in einer Menge von 1 bis 1000 g/100 kg Saatgut anwendet.

13. Saatgut, enthaltend die Mischung gemäß einem der Ansprüche 2 bis 6 in einer Menge von 1 bis 1000 g/100 kg.

14. Verwendung von Menadione gemäß einem der Ansprüche 1 bis 4 und der Wirkstoffe aus den Gruppen A) bis O) gemäß Anspruch 2 oder 3 zur Herstellung eines zur Bekämpfung von Schadpilzen geeigneten Mittels.

**Claims**

1. The use of menadione of the formula I

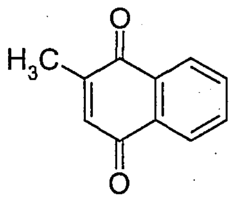

I

or one of its plant-compatible acid addition salts for enhancing the activity of agrochemicals against phytopathogenic fungi.

**2.** A fungicidal mixture for controlling phytopathogenic harmful fungi, which mixture comprises

1) menadione according to claim 1
and
2) at least one active compound II selected from the following groups:

A) azoles, such as cyproconazole, difenoconazole, epoxiconazole, fluquinconazole, flusilazole, hexaconazole, imazalil, metconazole, myclobutanil, penconazole, prochloraz, prothioconazole, tebuconazole, triadimefon, triadimenol, triflumizole;
B) strobilurins, such as azoxystrobin, dimoxystrobin, fluoxastrobin, kresoxim-methyl, metominostrobin, orysastrobin, picoxystrobin, pyraclostrobin, trifloxystrobin or methyl 2-(ortho-((2,5-dimethylphenyloxymethylene)phenyl)-3-methoxyacrylate;
C) acylalanines, such as benalaxyl, metalaxyl, mefenoxam, ofurace, oxadixyl;
D) amine derivatives, such as spiroxamine;
E) anilinopyrimidines, such as pyrimethanil, mepanipyrim or cyprodinil;
F) dicarboximides, such as iprodione, procymidone, vinclozolin;
G) cinnamides and analogs, such as dimethomorph, flumetover or flumorph;
H) dithiocarbamates, such as ferbam, nabam, maneb, metam, metiram, propineb, polycarbamate, thiram, ziram, zineb;
I) heterocylic compounds, such as benomyl, boscalid, carbendazim, dithianon, famoxadone, fenamidone, picobenzamid, proquinazid, quinoxyfen, thiophanate-methyl, triforine, N-(4'-bromobiphenyl-2-yl)-(4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide or 5-chloro-7-(4-methylpiperidin-1-yl)-6-(2,4,6-trifluorophenyl)-[1,2,4]triazolo[1,5-a]pyrimidine, N,N-dimethyl-3-(3-bromo-6-fluoro-2-methylindole-1-sulfonyl)-[1,2,4]triazole-1-sulfonamide, thiophene derivatives of the formula II-A,

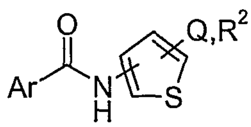

II-A

in which the variables are as defined below:

Ar is phenyl or a five- or six-membered aromatic heterocycle which contains one to four heteroatoms from the group consisting of O, N and S, where the cycles may be unsubstituted or substituted by one to three groups $R^{21}$:

$R^{21}$ is halogen, $C_1$-$C_4$-alkyl or $C_1$-$C_4$-haloalkyl;

$R^2$ is phenyl, $C_1$-$C_8$-alkyl, $C_1$-$C_8$-haloalkyl, $C_1$-$C_8$-alkoxy, $C_1$-$C_8$-haloalkoxy;
Q is hydrogen, $C_1$-$C_8$-alkyl, $C_1$-$C_8$-haloalkyl, $C_1$-$C_8$-alkoxy, $C_1$-$C_8$-haloalkoxy;

K) sulfur and copper fungicides, such as Bordeaux mixture, copper acetate, copper oxychloride, basic copper sulfate;

L) nitrophenyl derivatives, such as dinocap;
M) phenylpyrroles, such as fenpiclonil or fludioxonil;
N) sulfenic acid derivatives, such as captafol, dichlofluanid, tolylfluanid;
O) other fungicides selected from the group consisting of benthiavalicarb, chlorothalonil, cyflufenamid, diclofluanid, diethofencarb, ethaboxam, fenhexamid, fluazinam, iprovalicarb, mandipropamid, metrafenone, zoxamide;
oxime ether derivatives of the formula III,

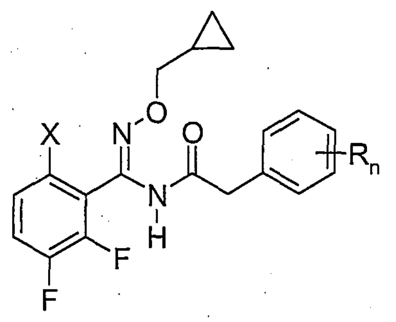

III

in which

X is $C_1$-$C_4$-haloalkoxy,
n is 0, 1, 2 or 3,
R is halogen, $C_1$-$C_4$-alkyl, $C_1$-$C_4$-haloalkyl, $C_1$-$C_4$-alkoxy or haloalkoxy; and

phenylamidine derivatives of the formula IV,

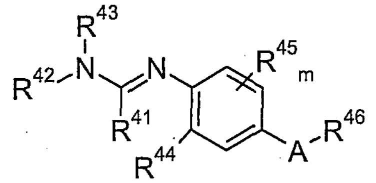

IV

in which the variables are as defined below:

$R^{41}$ is hydrogen, $C_1$-$C_8$-alkyl, $C_2$-$C_8$-alkenyl or $C_2$-$C_8$-alkynyl which are unsubstituted or may be substituted by one to three groups $R^a$:

$R^a$ is halogen, $C_1$-$C_8$-alkoxy, $C_1$-$C_8$-haloalkoxy, $C_1$-$C_8$-alkylthio or phenyl which may be substituted by halogen, $C_1$-$C_8$-alkyl, $C_1$-$C_8$-haloalkyl, $C_1$-$C_8$-alkoxy, $C_1$-$C_8$-haloalkoxy or $C_1$-$C_8$-alkylthio;

$R^{42}$,$R^{43}$ may be identical or different and are hydrogen, cyano, $C_1$-$C_8$-alkyl, $C_2$-$C_8$-alkenyl, $C_2$-$C_8$-alkynyl, $C_1$-$C_8$-alkoxy, $C_1$-$C_8$-alkoxyalkyl, benzyloxy or $C_1$-$C_8$-alkylcarbonyl which are unsubstituted or may be substituted by one to three groups $R^a$;
$R^{44}$ is hydrogen, $C_1$-$C_8$-alkyl, $C_2$-$C_8$-alkenyl or $C_2$-$C_8$-alkynyl which are unsubstituted or may be substituted by one to three groups $R^b$:
$R^b$ is one of the groups mentioned under $R^a$, cyano, $C(=O)R^c$, $C(=S)R^c$ or $S(O)_pR^c$,

$R^c$ is $C_1$-$C_8$-alkyl, $C_1$-$C_8$-haloalkyl, $C_1$-$C_8$-alkoxy, $C_1$-$C_8$-haloalkoxy, $C_1$-$C_8$-alkylthio, amino, $C_1$-$C_8$-alkylamino, di($C_1$-$C_8$-alkyl)amirio or phenyl which may be substituted by halogen, $C_1$-$C_8$-alkyl, $C_1$-$C_8$-haloalkyl, $C_1$-$C_8$-alkoxy, $C_1$-$C_8$-haloalkoxy or $C_1$-$C_8$-alkylthio;

m is 0 or 1;

$R^{45}$ is one of the groups mentioned under $R^{44}$;
A is a direct bond, -O-, -S-, $NR^d$, $CHR^e$ or -O-$CHR^e$;
$R^d$,$R^e$ are one of the groups mentioned under $R^a$;
$R^{46}$ is phenyl or a five- or six-membered saturated, partially unsaturated or aromatic heterocycle which contains one to four heteroatoms from the group consisting of O, N and S, where the groups $R^{46}$ are unsubstituted or may be substituted by one to three $R^f$:

$R^f$ is one of the groups mentioned under $R^b$ or
amino, $C_1$-$C_8$-alkylamino, di($C_1$-$C_8$-alkyl)amino, $C_1$-$C_8$-haloalkyl, $C_1$-$C_8$-alkoxyalkyl, $C_2$-$C_8$-alkenyloxyalkyl, $C_2$-$C_8$-alkynyloxyalkyl, $C_1$-$C_8$-alkylcarbonyloxy-$C_1$-$C_8$-alkyl, cyanooxy-$C_1$-$C_8$-alkyl, $C_3$-$C_6$-cycloalkyl or phenoxy, where the cyclic groups may be substituted by halogen, $C_1$-$C_8$-alkyl, $C_1$-$C_8$-haloalkyl, $C_1$-$C_8$-alkoxy, $C_1$-$C_8$-haloalkoxy or $C_1$-$C_8$-alkylthio;

compounds of the formula V

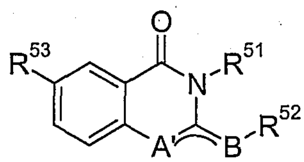

V

in which the variables are as defined below:

A' is O or N;
B is N or a direct bond;
$R^{51}$ is $C_1$-$C_4$-alkyl;
$R^{52}$ is $C_1$-$C_4$-alkoxy; and
$R^{53}$ is halogen;

in a synergistically effective amount.

**3.** The fungicidal mixture as claimed in claim 2, comprising, as component 2), at least one active compound selected from the following groups:

A) azoles, such as cyproconazole, difenoconazole, epoxiconazole, fluquinconazole, flusilazole, hexaconazole, imazalil, metconazole, myclobutanil, penconazole, prochloraz, prothioconazole, tebuconazole, triadimefon, triadimenol, triflumizole;
B) strobilurins, such as azoxystrobin, dimoxystrobin, fluoxastrobin, kresoxim-methyl, metominostrobin, orysastrobin, picoxystrobin, pyraclostrobin or trifloxystrobin;
C) acylalanines, such as benalaxyl, metalaxyl, mefenoxam, ofurace, oxadixyl;
D) amine derivatives, such as spiroxamine;
E) anilinopyrimidines, such as pyrimethanil, mepanipyrim or cyprodinil;
F) dicarboximides, such as iprodione, procymidone, vinclozolin;
G) cinnamides and analogs, such as dimethomorph, flumetover or flumorph;
H) dithiocarbamates, such as ferbam, nabam, maneb, metam, metiram, propineb, polycarbamate, thiram, ziram, zineb;
I) heterocylic compounds, such as benomyl, boscalid, carbendazim, dithianon, famoxadone, fenamidone, picobenzamid, proquinazid, quinoxyfen, thiophanate-methyl, triforine, 5-chloro-7-(4-methylpiperidin-1-yl)-6-(2,4,6-trifluorophenyl)-[1,2,4]triazolo[1,5-a]pyrimidine, N,N-dimethyl-3-(3-bromo-6-fluoro-2-methylindole-1-sulfonyl)-[1,2,4]triazole-1-sulfonamide, or
thiophene derivatives of the formula II-A,

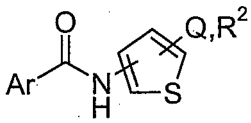

II-A

K) sulfur and copper fungicides, such as Bordeaux mixture, copper acetate, copper oxychloride, basic copper sulfate;
L) nitrophenyl derivatives, such as dinocap;
M) phenylpyrroles, such as fenpiclonil or fludioxonil;
N) sulfenic acid derivatives, such as captafol, dichlofluanid, tolylfluanid;
O) other fungicides selected from the group consisting of benthiavalicarb, chlorothalonil, cyflufenamid, diclofluanid, diethofencarb, ethaboxam, fenhexamid, fluazinam, iprovalicarb, metrafenone, zoxamide;
oxime ether derivatives of the formula III,

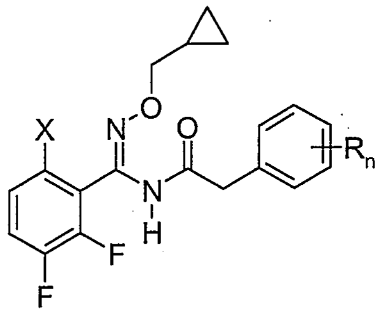

III

phenylamidine derivatives of the formula IV,

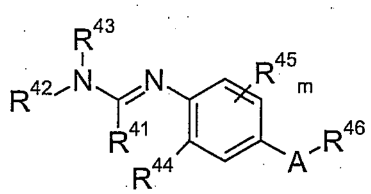

IV

and
compounds of the formula V.

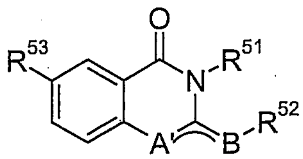

V

**4.** The fungicidal mixture according to claim 2 or 3, comprising, as active component 1, menadione x $NaHSO_3$ .

**5.** The fungicidal mixture according to claim 2 or 3, comprising, in addition to menadione, two active compounds from groups A) to O).

**6.** The fungicidal mixture according to any of claims 2 to 5, comprising menadione and an active compound II in a weight ratio of from 100:1 to 1:100.

**7.** A composition, comprising a liquid or solid carrier and a mixture according to any of claims 2 to 6.

**8.** A method for controlling phytopathogenic harmful fungi, which comprises treating the fungi, their habitat or the plants to be protected against fungal attack, the soil or seed with an effective amount of menadione accoridng to any of claims 2 to 4 and an active compound from groups A) to O) according to claim 2 or 3.

**9.** The method according to claim 8, wherein menadione according to any of claims 1 to 4 and the active compound (s) from groups A) to O) according to claim 2 or 3 are applied simultaneously, that is jointly or separately, or successively.

**10.** The method according to claim 8 or 9, wherein menadione according to any of claims 1 to 4 and the active compound (s) from groups A) to O) according to claim 2 or 3 are applied successively.

**11.** The method according to any of claims 8 to 10, wherein menadione according to any of claims 1 to 4 and the active compound(s) from groups A) to O) according to claim 2 or 3 or the mixtures according to any of claims 2 to 5 are applied in an amount of from 5 g/ha to 2000 g/ha.

**12.** The method according to claim 8 or 9, wherein menadione according to any of claims 1 to 4 and the active compound (s) from groups A) to O) according to claim 2 or 3 or the mixture according to any of claims 2 to 6 are applied in an amount of from 1 to 1000 g/100 kg of seed.

**13.** Seed, comprising the mixture according to any of claims 2 to 6 in an amount of from 1 to 1000 g/100 kg.

**14.** The use of menadione according to any of claims 1 to 4 and the active compounds from groups A) to O) according to claim 2 or 3 for preparing a composition suitable for controlling harmful fungi.

## Revendications

**1.** Utilisation de ménadiones de formule I :

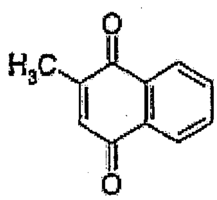

I

ou d'un de leurs sels d'addition d'acide non-phytotoxiques en vue du renforcement de l'efficacité de produits agrochimiques contre les champignons pathogènes pour les plantes.

**2.** Mélanges fongicides pour lutter contre les champignons nocifs pathogènes pour les plantes contenant :

1) des ménadiones selon la revendication 1
et
2) au moins un principe actif II sélectionné dans les groupes suivants :

a. des azoles comme le cyproconazole, les difénoconazoles, l'époxyconazole, le fluquiconazole, le flusilazol, l'hexaconazole, l'imazalil, le metconazole, le myclobutanil, le penconazole, le prochloraz, le prothioconazole, le tébuconazole, le triadiméfone, le triadiménole, le trifluoromizole;
b. des strobilurines comme l'azoxystrobine, la dimoxystrobine, la fluoxastrobine, le crésoxime-méthyle, la métominostrobine, l'orysastrobine, la picoxystrobine, la pyraclostrobine, la trifloxystrobine ou le méthylester d'acide 2-(ortho-((2,5-diméthylphényloxyméthylène)phényl)-3-méthoxyacrylique;
c. les acylanilines comme le bénalaxyle, le métalaxyle, le méfénoxam, l'ofurace, l'oxadixyle;
d. les dérivés d'amine comme la spiroxamine;
e. les anilinopyrimidines comme le pyriméthanile, le mépanipyrime ou le cyprodinile;
f. les dicarboximides comme l'iprodion, le procymidon, la vinclozoline;
g. les amides d'acide cinnamique et les analogues comme le diméthomorphe, le flumetover ou le flumorphe;
h. les dithiocarbamates comme le ferbam, le nabam, le maneb, le métam, le métiram, le propineb, le polycarbamate, le thiram, le ziram, le zineb;
i. les composés hétérocycliques comme le bénomyle, le boscalide, le carbendazime, le dithianone, le famoxadone, le fénamidone, le picobenzamide, le proquinazide, le quinoxyfène, le thiophanate-méthyle, la trifiorine, le (4'-bromobiphényl-2-yl)-amide d'acide 4-difluorométhyl-2-méthylthiazol-5-carboxylique, le (4'-trifluorométhylbiphényl-2yl)-amide d'acide 4 difluorométhyl-2méthyl-thiazol-5-carboxylique, le (4'-chloro-3'-fluorobiphényl-2-yl)amide d'acide 4-difluorométhyl-2-méthylthiazol-5)carboxylique, le (3',4'-dichloro-4-fluorobiphényl-2-yl)-amide d'acide 3-difluorométhyl-1-méthylpyrazol-4-carboxylique ou

la 5-chloro-7-(4-méthylpipéridin-1-yl)-6-(2,4,6-trifluorophényl)-[1,2,4]triazolo[1,5-a]pyrimidine,
le diméthylamide d'acide 3-(3-bromo-6-fluoro-2-méthyl-indol-1-sulfonyl)-[1,2,4]triazolo-1-sulfonique.
les dérivés de thiophène de formule II-A :

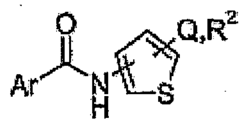

II-A

dans laquelle les variables ont les significations suivantes :

Ar désigne un radical phényle ou un hétérocycle aromatique penta- ou hexavalent contenant un à quatre hétéroatomes du groupe 0, N ou S, les cycles n'étant pas substitués ou pouvant être substitués par un à trois groupes $R^{21}$;
$R^{21}$ désigne un halogène, $C_1$-$C_4$-alkyle ou $C_1$-$C_4$-halogénalkyle;
$R^2$ désigne un radical phényle, $C_1$-$C_8$-alkyle, $C_1$-$C_8$-halogénalkyle, $C_1$-$C_8$-alcoxy, $C_1$-$C_8$-halogénalcoxy;
Q désigne l'hydrogène, un radical $C_1$-$C_8$-alkyle, $C_1$-$C_8$-halogénalkyle, $C_1$-$C_8$-alcoxy, $C_1$-$C_8$-halogénalcoxy;

k. les fongicides de soufre et de cuivre comme le bouillon bordeaux, l'acétate de cuivre, l'oxychlorure de cuivre, le sulfate de cuivre basique;
l. les dérivés de nitrophényle comme le dinocap;
m. les phénylpyrroles comme le fenpiclonile ou le fludioxonile;
n. les dérivés d'acide sulféniques comme le captafol, le dichlofluanide, le tolylfluanide;
o. d'autres fongicides sélectionnés à partir du benthiavalicarb, du chlorothalonile, du cyflufénamide, du diclofluanide, du dithiofencarb, de l'éthaboxam, du fenhexamide, du fluazinam, de l'iprovalicarb, du mandipropamide, du métraphénone, du zoxamide;
des dérivés d'éther d'oxime de formule III :

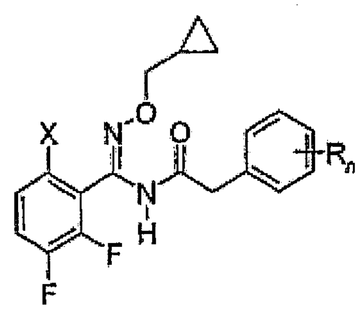

III

dans laquelle les variables ont les significations suivantes :

x un radical $C_1$-$C_4$-halogénalcoxy;
n 0, 1, 2 ou 3;
R un halogène, un radical $C_1$-$C_4$-alkyle, $C_1$-$C_4$-halogénalkyle, $C_1$-$C_4$-alcoxy ou halogénalcoxy; et

Dérivés de phénylamidine de formule IV :

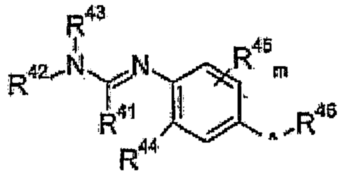

IV

dans laquelle les variables ont les significations suivantes :

$R^{41}$ désigne l'hydrogène, un radical $C_1$-$C_8$-alkyle, $C_2$-$C_8$-alcényle ou $C_2$-$C_8$-alcinyle qui ne sont pas substitués ou peuvent être substitués par un à trois groupes $R^8$ :
$R^a$ désigne un halogène, un groupe $C_1$-$C_8$-alcoxy, $C_1$-$C_8$-halogénalcoxy, $C_1$-$C_8$-alkylthio ou un radical phényle qui peut être substitué par un halogène, un radical $C_1$-$C_8$-alkyle, $C_1$-$C_8$-halogénalkyle, $C_1$-$C_8$-alcoxy, $C_1$-$C_8$-halogénalcoxy ou $C_1$-$C_8$-alkylthio;
$R^{42}$, $R^{43}$ peuvent être identiques ou différents et désigner l'hydrogène, un radical cyano, $C_1$-$C_8$-alkyle, $C_2$-$C_8$-alcényle, $C_2$-$C_8$-alcinyle, $C_1$-$C_8$-alcoxy, $C_1$-$C_8$-alcoxyalkyle, benzyloxy ou $C_1$-$C_8$-alkylcarbonyle qui sont non substitués ou peuvent être substitués par un à trois groupes $R^a$ ;
$R^{44}$ désigne l'hydrogène, un radical $C_1$-$C_8$-alkyle, $C_2$-$C_8$-alcényle ou $C_2$-$C_8$-alcinyle qui sont non substitués ou peuvent être substitués par un à trois groupes $R^b$;
$R^b$ désigne un des groupes cités pour $R^a$, un radical cyano, $C(=O)R^c$, $C(=S)R^c$ ou $S(O)_pR^c$,
$R^c$ désigne un radical $C_1$-$C_8$-alkyle, $C_1$-$C_8$-halogénalkyle, $C_1$-$C_8$-alcoxy, $C_1$-$C_8$-halogénalcoxy, $C_1$-$C_8$-alkylthio, amino, $C_1$-$C_8$-alkylamino, di($C_1$-$C_8$-alkyl) amino ou un radical phényle qui peut être substitué par un halogène, un radical $C_1$-$C_8$-alkyle, $C_1$-$C_8$-halogénalkyle, $C_1$-$C_8$-alcoxy, $C_1$-$C_8$-halogénalcoxy ou $C_1$-$C_8$-alkylthio;
m désigne 0 ou 1;
$R^{45}$ désigne l'un des groupes cités pour $R^{44}$;
A désigne une liaison directe, -O-, -S-, $NR^d$, $CHR^e$ ou -O-$CHR^e$;
$R^d$, $R^e$ un des groupes cités pour $R^a$;
$R^{46}$ désigne un groupe phényle ou un hétérocycle penta- ou hexavalent, saturé, partiellement insaturé ou aromatique contenant un à quatre hétéroatomes du groupe O, N ou S, les groupes $R^{46}$ étant non substitués ou pouvant être substitués par un à trois $R^f$;
$R^f$ désigne un des groupes cités pour $R^b$ ou un groupe amino, $C_1$-$C_8$-alkylamino, di($C_1$-$C_8$-alkyl)amino, $C_1$-$C_8$-halogénalkyle, $C_1$-$C_8$-alcoxyalkyle, $C_2$-$C_8$-alcényloxyalkyle, $C_2$-$C_8$-alcinyloxyalkyle, $C_1$-$C_8$-alkylcarbonyloxy-$C_1$-$C_8$-alkyle; cyanoxy-$C_1$-$C_8$-alkyle, $C_3$-$C_6$-cycloalkyle ou phénoxy, les groupes cycliques pouvant être substitués par un halogène, un radical $C_1$-$C_8$-alkyle, $C_1$-$C_8$-halogénalkyle, $C_1$-$C_8$-alcoxy, $C_1$-$C_8$-halogénalcoxy ou $C_1$-$C_8$-alkylthio;

des composés de formule V :

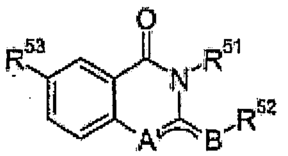

V

dans laquelle les variables ont la signification suivants :

A' désigne O ou N;
B désigne N ou une liaison directe;
$R^{51}$ désigne un radical $C_1$-$C_4$-alkyle;
$R^{52}$ désigne un radical $C_1$-$C_4$-alcoxy; et
$R^{53}$ désigne un halogène;

dans une quantité active synergiquement.

3. Mélanges fongicides selon la revendication 2, contenant comme composant 2) au moins un principe actif sélectionné dans les groupes suivants :

a. des azoles comme le cyproconazole, les difénoconazoles, l'époxyconazole, le fluquiconazole, le flusilazol, l'hexaconazole, l'imazalil, le metconazole, le myclobutanil, le penconazole, le prochloraz, le prothioconazole, le tébuconazole, le triadiméfone, le triadiménole, le trifluoromizole;
b. des strobilurines comme l'azoxytrobine, la dimoxystrobine, la fluoxastrobine, le crésoxime-méthyle, la métominostrobine, l'orysastrobine, la picoxystrobine, la pyracolostrobine ou la trifloxystrobine;

c. les acylanilines comme le bénalaxyle, le métalaxyle, le méfénoxam, l'ofurace, l'oxadixyle;
d. les dérivés d'amine comme la spiroxamine;
e. les anilinopyrimidines comme le pyriméthanile, le mépanipyrime ou le cyprodinil;
f. les dicarboximides comme l'iprodion, le procymidon, la vinclozoline;
g. les amides d'acide cinnamique et les analogues comme le diméthomorphe, le flumetover ou le flumorphe;
h. les dithiocarbamates comme le ferbam, le nabam, le maneb, le métam, le métiram, le propineb, le polycarbamate, le thiram, le ziram, le zineb;
i. les composés hétérocycliques comme le bénomyle, le boscalide, le carbendazime, le dithianone, le famoxadone, le fénamidone, le picobenzamide, le proquinazide, le quinoxyfène, le thiophanate-méthyle, la triforine, la 5-chloro-7-(4-méthylpipéridin-1-yl)-6-(2,4,6-trifluorophényl)-[1,2,4]triazolo[1,5-a]pyrimidine, le diméthylamide d'acide 3-(3-bromo-6-fluoro-2-méthyl-indol-1-sulfonyl)-[1,2,4]triazolo-1-sulfonique.
les dérivés de thiophène de formule II-A :

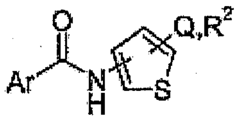

II-A

k. les fongicides de soufre et de cuivre comme le bouillon bordeaux, l'acétate de cuivre, l'oxychlorure de cuivre, le sulfate de cuivre basique;
l. les dérivés de nitrophényle comme le dinocap;
m. les phénylpyrroles comme le fenpiclonile ou le fludioxonile;
n. les dérivés d'acide sulfénique comme le captafol, le dichlofluanide, le tolylfluanide;
o. d'autres fongicides sélectionnés à partir du benthiavalicarb, du chlorothalonile, du cyflufénamide, du diclofluanide, du dithiofencarb, de l'éthaboxam, du fenhexamide, du fluazinam, de l'iprovalicarb, du métrafénone, du zoxamide;
des dérivés d'éther d'oxime de formule III :

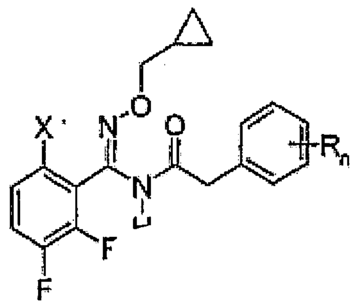

III

des dérivés de phénylamidine de formule IV :

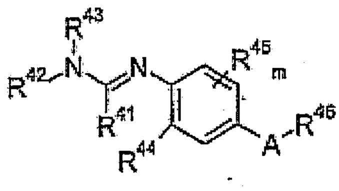

IV

et
des composés de formule V :

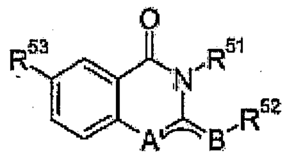

V

4. Mélanges fongicides selon l'une des revendications 2 ou 3, contenant comme composant actif 1 des ménadiones x $NaHSO_3$.

5. Mélanges fongicides selon l'une des revendications 2 ou 3, contenant, outre des ménadiones, au moins deux principes actifs des groupes A) à O).

6. Mélanges fongicides conformément à l'une des revendications 2 à 5, contenant des ménadiones et un principe actif dans un rapport pondéral de 100:1 à 1:100.

7. Produits contenant un excipient solide ou liquide et un mélange conformément à l'une des revendications 2 à 6.

8. Procédé de lutte contre les champignons nocifs pathogènes pour les plantes, **caractérisé en ce que** l'on traite des champignons, leur environnement ou les plantes à protéger d'une attaque fongique, le sol ou les semences avec une quantité active de ménadiones selon l'une des revendications 2 à 4 et d'un principe actif des groupes A) à O) selon l'une des revendications 2 ou 3.

9. Procédé selon la revendication 8, **caractérisé en ce que** l'on applique simultanément, et ce ensemble ou séparément, ou successivement, les ménadiones conformément à l'une des revendications 1 à 4 et le ou les principes actifs des groupes A) à O) conformément à l'une des revendications 2 ou 3.

10. Procédé selon l'une des revendications 8 ou 9, **caractérisé en ce que** l'on applique successivement des ménadiones conformément à l'une des revendications 1 à 4 et le ou les principes actifs des groupes A) à O) conformément à l'une des revendications 2 ou 3.

11. Procédé selon l'une des revendications 8 à 10, **caractérisé en ce que** l'on applique des ménadiones conformément à l'une des revendications 1 à 4 et le ou les principes actifs des groupes A) à O) conformément à l'une des revendications 2 ou 3 ou les mélanges conformément à l'une des revendications 2 à 5 dans une quantité de 5 g/ha à 2000 g/ha.

12. Procédé selon l'une des revendications 8 ou 9, **caractérisé en ce que** l'on applique des ménadiones conformément à l'une des revendications 1 à 4 et le ou les principes actifs des groupes A) à O) conformément à l'une des revendications 2 ou 3 ou le mélange conformément à l'une des revendications 2 à 6 dans une quantité de 1 à 1000 g/ 100 kg de semence.

13. Semence, contenant le mélange conformément à l'une des revendications 2 à 6 dans une quantité de 1 à 1000 g/ 100 kg.

14. Utilisation de ménadiones selon l'une des revendications 1 à 4 et des principes actifs des groupes A) à O) conformément à l'une des revendications 2 ou 3 pour la préparation d'un produit adéquat pour la lutte contre les champignons.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 00006143 A
- WO 8201821 A
- WO 01028328 A
- WO 03105586 A
- US 4664696 A
- GB 2098607 A
- EP 196038 A
- GB 857383 A
- US 3991071 A
- WO 9616048 A
- EP 40345 A
- JP 54119462 A
- EP 382375 A
- EP 477631 A
- WO 9727189 A
- EP 253213 A
- EP 398692 A
- WO 9715552 A
- EP 278595 A
- WO 9601256 A
- EP 460575 A
- GB 1500581 A
- WO 9601559 A
- EP 281842 A
- DD 151404 A
- EP 224339 A
- EP 310550 A
- GB 1312536 A
- US 3903090 A
- DE 2207576 A
- EP 120321 A
- EP 860438 A
- US 1972961 A
- US 2317765 A
- US 2504404 A
- US 2791605 A
- US 3248400 A
- BE 611960
- DE 642532
- US 2457674 A
- US 3631176 A
- EP 545099 A
- US 3657443 A
- WO 9942447 A
- WO 9748684 A
- US 5240940 A
- DE 1930540 A
- DE 1901421
- US 2526660 A
- DE 1193498
- JP 9323984 A
- US 3290353 A
- WO 9619442 A
- DE 1193498 B
- EP 639574 A
- EP 472996 A
- US 5945567 A
- EP 226917 A
- WO 03066609 A
- WO 9846607 A
- EP 1031571 A
- JP 2001192381 A
- JP 10130268 B
- WO 9914188 A
- WO 0046184 A
- WO 02094797 A


### In der Beschreibung aufgeführte Nicht-Patentliteratur


- **A. A. BORGES ; H. J. COOLS ; J. A. LUCAS.** *Plant Pathology,* 2003, vol. 52 (4), 429ff
- *Proc. Br. Crop Prot. Conf.-Pests Dis.,* 1992, vol. 411, 5-3
- *Proc. Br. Crop Prot. Conf.-Pests Dis.,* 1984, vol. 413, 1
- Pesticide Manual. 712
- Br. Crop Prot. Conf. - Pests Dis. 1988, vol. 1, 65
- The Pecticide Manual. The British Crop Protection Council. 1995, vol. 10, 482
- *Proc. Br. Crop Prot. Conf. - Pests Dis.,* 1998, vol. 2, 327
- The Pecticide Manual. The British Crop Protection Council. 1995, vol. 10, 474
- **COLBY, S. R.** Calculating synergistic and antagonistic responses of herbicide Combinations. *Weeds,* 1967, vol. 15, 20-22